(19) Europäisches Patentamt
European Patent Office
Office européen des brevets

(11) **EP 4 036 519 A1**

(12) **EUROPÄISCHE PATENTANMELDUNG**

(43) Veröffentlichungstag:
**03.08.2022 Patentblatt 2022/31**

(21) Anmeldenummer: **21154797.1**

(22) Anmeldetag: **02.02.2021**

(51) Internationale Patentklassifikation (IPC):
**G01B 21/04** (2006.01)   **G05B 19/401** (2006.01)

(52) Gemeinsame Patentklassifikation (CPC):
**G01B 21/04; G05B 19/401**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Industrielle Messtechnik GmbH**
**73447 Oberkochen (DE)**

(72) Erfinder:
• **Sievers, Torsten**
**89522 Heidenheim (DE)**

• **Spengler, Daniel**
**71384 Weinstadt-Beutelsbach (DE)**
• **Dotschkal, Florian**
**73453 Abtsgmünd (DE)**
• **Schramm, Tobias**
**73569 Eschach (DE)**

(74) Vertreter: **Patentanwälte Bressel und Partner mbB**
**Potsdamer Platz 10**
**10785 Berlin (DE)**

Bemerkungen:
Geänderte Patentansprüche gemäss Regel 137(2) EPÜ.

(54) **VERFAHREN UND ANORDNUNG ZUM PRÜFEN VON WERKSTÜCKEN**

(57)   Die Erfindung betrifft ein Verfahren zum Prüfen von Werkstücken auf Basis einer Ermittlung von Koordinaten der Werkstücke unter Verwendung von zumindest einem Koordinatenmessgerät (10), wobei
- Prüfmerkmale (51), die aus den Koordinaten der Werkstücke ermittelbar sind, definiert werden oder Informationen über eine Definition der Prüfmerkmale (51) empfangen werden und
- anhand der Prüfmerkmale (51) ein Nutzungsumfang (63) einer Nutzung des zumindest einen Koordinatenmessgeräts (10) ermittelt wird
und wobei,
a) Koordinaten der Werkstücke unter Verwendung von zumindest einem Koordinatenmessgerät (10) ermittelt werden und die Prüfmerkmale (51) aus den ermittelten Koordinaten ermittelt werden, wobei bei der Ermittlung von jedem der Prüfmerkmale (51) die für mehrere Messpunkte und/oder zumindest einen Messbereich des Werkstücks ermittelten Koordinaten verwendet werden, und/oder
b) für zumindest eines der Prüfmerkmale (51) eine Messvorschrift erzeugt wird, die die von einem Koordinatenmessgerät (10) zu vermessenden Messpunkte der Werkstücke vorgibt.

Fig. 3

**Beschreibung**

Die Erfindung betrifft ein Verfahren zum Prüfen von Werkstücken auf Basis einer Ermittlung von Koordinaten der Werkstücke unter Verwendung von zumindest einem Koordinatenmessgerät, wobei Prüfmerkmale, die aus den Koordinaten der Werkstücke ermittelbar sind, definiert werden oder Informationen über eine Definition der Prüfmerkmale empfangen werden. Die Erfindung betrifft ferner eine Anordnung, die die Prüfung von Werkstücken betrifft.

Bei der Prüfung der Werkstücke werden Koordinaten der Werkstücke unter Verwendung von zumindest einem Koordinatenmessgerät ermittelt. Konkrete Ausgestaltungen des Verfahrens enthalten daher den Vorgang der Ermittlung der Koordinaten eines realen Werkstücks oder realer Werkstücke. Es ist jedoch auch bekannt, die Ermittlung der Koordinaten zumindest eines Werkstücks zunächst zu simulieren. Die Simulation erlaubt es, Erkenntnisse über die Ausführung der Prüfung zu gewinnen und vorab Entscheidungen zu treffen, wie die Prüfung ausgeführt wird. Daher gehören zu dem hier beschriebenen Verfahren auch Ausgestaltungen, bei denen die Ermittlung der Koordinaten lediglich simuliert wird. Mit und ohne Simulation der Ermittlung von Koordinaten realer Werkstücke ist es ferner möglich, die Prüfung der Werkstücke vorzubereiten, wobei Prüfmerkmale der Werkstücke erhalten und/oder definiert werden und aus den Prüfmerkmalen eine Messvorschrift erzeugt wird. Die Messvorschrift gibt vor, welche Messpunkte eines Werkstücks von einem Koordinatenmessgerät zu vermessen sind, um ein einzelnes Prüfmerkmal, eine Mehrzahl von Prüfmerkmal oder alle zu ermittelnden Prüfmerkmale ermitteln zu können. Zu dem Verfahren gehören daher auch Ausgestaltungen, bei denen für zumindest ein Prüfmerkmal eines Werkstücks eine Messvorschrift erzeugt wird, die die zu vermessenden Messpunkte des Werkstücks vorgibt. Die Messvorschrift kann wie im Fall eines Messplans bereits alle für die Steuerung eines Messsensors eines konkreten Koordinatenmessgerät-Typs notwendigen Informationen enthalten oder Messpunkte vorgegeben, die mittels verschiedener Typen von Koordinatenmessgeräten und/oder verschiedener Typen von Messsensoren vermessen werden können.

Bei dem erfindungsgemäßen Verfahren werden daher a) Koordinaten der Werkstücke unter Verwendung von zumindest einem Koordinatenmessgerät ermittelt und die Prüfmerkmale aus den ermittelten Koordinaten ermittelt, wobei bei der Ermittlung von jedem der Prüfmerkmale die für mehrere Messpunkte und/oder zumindest einen Messbereich des Werkstücks ermittelten Koordinaten verwendet werden, und/oder wird b) für zumindest eines der Prüfmerkmale eine Messvorschrift erzeugt, die die von einem Koordinatenmessgerät zu vermessenden Messpunkte der Werkstücke vorgibt.

Unter den Begriff Koordinatenmessgerät fallen jegliche Arten von Geräten, mit denen sich Koordinaten von Werkstücken ermitteln lassen. Bei einer Klasse von Koordinatenmessgeräten handelt es sich bei den Koordinaten um Oberflächenkoordinaten, d. h es werden Koordinaten von Oberflächenpunkten von Werkstücken ermittelt. Eine andere Klasse von Koordinatenmessgeräten ist alternativ oder zusätzlich in der Lage, Koordinaten im Inneren von Werkstücken zu ermitteln. Hierzu gehören Koordinatenmessgeräte, die invasive, in den Werkstoff des Werkstücks eindringende Strahlung nutzen und insbesondere die Intensität der durch das Werkstück hindurchtretenden Strahlung messen. In vielen Fällen wird das Werkstück aus verschiedenen Richtungen durchstrahlt und wird anhand der Ergebnisse der Durchstrahlung eine insbesondere computergestützte Rekonstruktion des erfassten Werkstücks durchgeführt. Derartige Verfahren werden auch als Computertomografie (CT) bezeichnet. Unter den Begriff Koordinatenmessgerät fallen aber auch klassische Koordinatenmessgeräte zum Beispiel Geräte in Portalbauweise oder Gantrybauweise, Horizontalarmgeräte und Gelenkarmgeräte. Auch sind von dem Begriff Koordinatenmessgerät Maschinen erfasst, die zwar nicht primär als Koordinatenmessgeräte konzipiert sind, die aber so eingerichtet sind, wie ein Koordinatenmessgerät zu arbeiten. Insbesondere weisen diese Maschinen zumindest einen Messsensor auf, der für die Ermittlung der Koordinaten genutzt wird. Bekannt sind beispielsweise Roboter, zum Beispiel Roboterarme mit Drehgelenken, an denen anstelle eines Werkzeugs ein Sensor zur Erfassung der Werkstückoberfläche (beispielsweise ein Streifenprojektionssensor) befestigt ist, oder Werkzeugmaschinen, an denen anstelle eines Bearbeitungswerkzeugs oder zusätzlich zu einem Bearbeitungswerkzeug ein Messsensor (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist. Auch bezüglich der Arten von Sensoren, die von einem Koordinatenmessgerät zur Ermittlung der Koordinaten verwendet werden, ist die Erfindung nicht beschränkt. Es wurden bereits taktile Sensoren als Beispiel erwähnt, bei denen es sich zum Beispiel um solche vom schaltenden Typ oder vom messenden Typ handeln kann. Häufig werden alternativ oder zusätzlich optische Sensoren eingesetzt. Ferner gibt es zum Beispiel kapazitive Sensoren und induktive Sensoren.

Für die Planung der Vermessung von Werkstücken, insbesondere im Rahmen der Qualitätskontrolle bei der Serienfertigung von Werkstücken, werden Informationen benötigt, um Ergebnisse der Prüfung mit der gewünschten Genauigkeit und in akzeptabler Zeit zu erhalten. Insbesondere wenn ein signifikanter Anteil der Werkstücke während der Serienfertigung vermessen werden soll, kann die Fertigung bei zu langer Messdauer verzögert werden, da die Weiterbearbeitung vor Fertigstellung der Vermessung nicht möglich ist.

Betreiber von Koordinatenmessgeräten stellen sich ferner häufig die Frage, ob das vorhandene Koordinatenmessgerät oder die vorhandenen Koordinatenmessgeräte für die in Zukunft stattfindende Vermessung von Werkstücken geeignet sind und ob es für die Messaufgabe besser geeignete Geräte gibt. Die Grundlage für die Entscheidung über die Anschaffung neuer Geräte wird häufig lediglich auf Basis der mit dem jeweiligen Gerät erreichbaren Genauigkeit der Vermessung und auf Basis der von dem Gerät benötigten Zeit für einen typischen Messablauf getroffen. Mit der Anschaffung eines neuen Geräts sind zunächst Kosten verbunden. Ob diesen Anschaffungs- und Einrichtungskosten ein entsprechender Nutzungswert gegenübersteht, ist oft vorab nicht ermittelbar.

Auch wenn geeignete Messgeräte bereits zur Verfügung stehen, ist es von Vorteil deren Einsatz auf Basis objektiver Informationen planen zu können. Andernfalls kann es beispielsweise vorkommen, dass ein vorhandenes Koordinatenmessgerät deutlich weniger Nutzen bei der Vermessung von Werkstücken ergibt als ein anderes vorhandenes Koordinatenmessgerät.

Es ist eine Aufgabe der vorliegenden Erfindung, insbesondere Betreiber und Hersteller von Koordinatenmessgeräten mit objektiver Information über die Nutzung des oder der Geräte bei der Vermessung von Werkstücken zu versorgen.

Es wird vorgeschlagen, die Nutzung zumindest eines Koordinatenmessgeräts nicht oder nicht ausschließlich auf Basis der für die Vermessung benötigten Zeitdauer und Messgenauigkeit zu beurteilen, sondern zumindest auch auf Basis der ermittelten oder zu ermittelnden Prüfmerkmale.

Im allgemeinen Sprachgebrauch sind Prüfmerkmale Qualitätsmerkmale eines Prozesses oder Produkts. In der Koordinatenmesstechnik basieren Prüfmerkmale auf den unmittelbaren und mittelbaren Messergebnissen aus der Vermessung von Werkstücken. Typischerweise werden zunächst Koordinaten des jeweiligen Werkstücks durch dessen Vermessung mittels eines oder mehrerer Koordinatenmessgeräte ermittelt und wird dann zumindest ein vordefiniertes Prüfmerkmal ermittelt. In aller Regel werden für die Ermittlung des Prüfmerkmals die Koordinaten von mehr als einem Punkt oder zumindest einem Bereich des Werkstücks benötigt. Beispiele für Prüfmerkmale sind Geradlinigkeit, Ebenheit, Rundheit, Profil einer Linie, Profil einer Oberfläche, Position eines Elements des Werkstücks, Rechtwinkligkeit, Neigung, Parallelität, Symmetrie, Koaxialität und Konzentrizität. Dem Fachmann sind zahlreiche weitere Prüfmerkmale bekannt.

Anhand der ermittelten oder der zu ermittelnden Prüfmerkmale wird ein Nutzungsumfang einer Nutzung des Koordinatenmessgeräts oder der Koordinatenmessgeräte ermittelt, das oder die für die Ermittlung der Koordinaten genutzt werden soll(en) oder genutzt worden ist/sind. Wenn der Nutzungsumfang anhand der ermittelten Prüfmerkmale ermittelt wird, liegen die Koordinaten bereits vor und wurden für die Ermittlung der Prüfmerkmale genutzt. Es ist jedoch auch möglich, den Nutzungsumfang ganz oder teilweise vorab zu ermitteln, wenn feststeht, welche Prüfmerkmale ermittelt werden sollen und optional auch wie sie ermittelt werden sollen, insbesondere gemäß welcher Messvorschrift. Dies ermöglicht es insbesondere, verschiedene Szenarien der Ermittlung von Prüfmerkmalen zu erstellen und für jedes Szenario den Nutzungsumfang zu ermitteln. Zum Beispiel wird in diesem Fall lediglich eines der Szenarien in die Praxis umgesetzt, d. h. es werden lediglich die Prüfmerkmale gemäß einem der Szenarien auf Basis tatsächlich ermittelter Koordinaten zumindest eines Werkstücks ermittelt. Bei den Szenarien kann es sich zum Beispiel jeweils um einen Prüfplan und/oder einen Messplan handeln. Ein Prüfplan enthält die Information, welche Prüfmerkmale durch die Vermessung eines Werkstücks zu ermitteln sind. Ein Messplan, d. h. eine spezielle Art der bereits genannten Messvorschrift, enthält die Information wie zumindest ein Koordinatenmessgerät zu betreiben ist, um die Prüfmerkmale eines zugeordneten Prüfplans ermitteln zu können. Prüfpläne sind in der Regel unabhängig davon, mit welchem Koordinatenmessgerät die Vermessung des Werkstücks durchgeführt wird. Messpläne werden dagegen unter Berücksichtigung der von einem zu verwendenden Koordinatenmessgerät ausführbaren Bewegungen aufgestellt. Sie können auch konkret die Bewegungsinformationen und/oder Steuerbefehle enthalten, die eine Steuerung eines Koordinatenmessgeräts dafür benötigt, um ein Werkstück zu vermessen. Insbesondere kann eine Vielzahl von typgleichen Werkstücken gemäß dem gleichen Prüfplan und optional auch gemäß dem gleichen Messplan vermessen werden.

Wie erwähnt muss eine Messvorschrift jedoch nicht alle Informationen enthalten, die für eine Steuerung eines Koordinatenmessgeräts erforderlich sind, um das zu prüfende Werkstück vermessen zu können. Insbesondere definiert die Messvorschrift für die einzelnen Prüfmerkmale lediglich die Lage und Anzahl der erforderlichen Messpunkte, zum Beispiel bezogen auf das Koordinatensystem des Werkstücks. Zum Beispiel kann die Lage und Anzahl der Messpunkte aus der Information über das Prüfmerkmal gesteuert durch Computersoftware auf einem Computer oder Computernetzwerk erzeugt werden. Solche Computersoftware, die ferner auch die Erzeugung des vollständigen Messplans steuert, wird auf dem Gebiet der Koordinatenmesstechnik auch als Applikationssoftware bezeichnet, Bei der Computersoftware kann es sich insbesondere um dieselbe Computersoftware handeln, die auch den vollständigen Messplan erzeugt. Alternativ können Vorgänge, nämlich a) Erfassung der Prüfmerkmale, optional einschließlich Definition der Prüfmerkmale, b) Ermittlung des Nutzungsumfangs anhand der Prüfmerkmale, c) Erstellung einer Messvorschrift durch Festlegung der Anzahl und Lage der Messpunkte der Prüfmerkmale und d) Erstellung des Messplans, einzeln oder in beliebigen Kombinationen von verschiedenen Recheneinrichtungen (mit jeweils zumindest einem Computer) zum Beispiel jeweils gesteuert durch Computersoftware ausgeführt werden. Der Nutzungsumfang kann bei einer anderen Ausgestaltung des Verfahrens bzw. der Anordnung nach der Erstellung der Messvorschrift oder des Messplans ermittelt werden, insbesondere wenn bei der Ermittlung des Nutzungsumfangs auch Informationen aus der Messvorschrift und/oder aus dem Messplan berücksichtigt werden, wie zum Beispiel welche Art und/oder welcher Typ eines Messsensors zu verwenden ist.

Insbesondere kann daher vor der Vermessung der Werkstücke ein Prüfplan erstellt werden, der eine Ermittlung zumindest eines der vordefinierten Prüfmerkmale für jedes zu vermessende Werkstück vorsieht, und kann anhand des Prüfplans der Nutzungsumfang der Nutzung des zumindest einen Koordinatenmessgeräts ermittelt werden. Da ein Prüfplan wie oben erwähnt mittels verschiedener Arten und Typen von Koordinatenmessgeräten ausgeführt werden kann, ist es jedenfalls möglich, die Ermittlung des Nutzungsumfangs anhand des Prüfplans ohne Festlegung auf eine bestimmte Art oder einen bestimmten Typ von Koordinatenmessgeräten durchzuführen. Umgekehrt ist es aber auch nicht ausgeschlossen und wird in bestimmten später noch näher beschriebenen Fällen auch bevorzugt, die Art und/oder den Typ des Koordinatenmessgeräts bei der Ermittlung des Nutzungsumfangs mit zu berücksichtigen. Generell, nicht nur in Bezug auf einen Prüfplan, ist es daher möglich, die Art und/oder den Typ des Koordinatenmessgeräts vor, während und/oder nach der Ermittlung des Nutzungsumfangs festzulegen.

In der Praxis ist für jedes quantitative Prüfmerkmal die erlaubte Toleranz anzugeben. Bei vielen quantitativen Prüfmerkmalen wie beispielsweise dem Durchmesser eines Werkstücks oder Werkstück-Bereichs kann die Toleranz durch eine einzige Zahl, oft in Bezug auf eine entsprechende Einheit einer Werteskala, angegeben werden. Liegt das Prüfmerkmal in dem durch die Zahl angegebenen Intervall auf der Werteskala oberhalb oder unterhalb des Sollwertes, ist das dem Prüfmerkmal entsprechende Qualitätskriterium erfüllt. Es gibt jedoch auch Fälle, bei denen es lediglich auf einer Seite des Sollwertes ein Toleranzintervall gibt oder die Toleranzintervalle auf den entgegengesetzten Seiten des Sollwertes unterschiedlich groß sind. Bereits der Prüfplan weist daher üblicherweise zu jedem quantitativen Prüfmerkmal die Information über die erlaubte Toleranz (im weiteren Text der Beschreibung lediglich: "Toleranz" oder "Toleranz eines Prüfmerkmals") auf. Außer quantitativen Prüfmerkmalen existieren auch nicht quantitative Prüfmerkmale, wie beispielsweise die Rauigkeit einer Oberfläche oder die Funktionsfähigkeit eines Bauteils. In solchen Fällen gibt es zum Beispiel lediglich zwei oder in manchen Fällen auch mehr als zwei mögliche diskrete Ergebnisse, wie "in Ordnung" oder "nicht in Ordnung".

Gemäß einer Ausgestaltung des Verfahrens werden Prüfplan-Daten erzeugt, die alle diejenigen Informationen enthalten, welche aus dem Prüfplan für die Ermittlung des Nutzungsumfangs relevant sind, wobei die Prüfplan-Daten gespeichert werden und wobei bei der Speicherung und/oder zur Speicherung der Prüfplan-Daten ein vorzugsweise zusätzlicher Schritt ausgeführt wird, der eine Sicherheit gegen eine Veränderung der Prüfplan-Daten erhöht. Unter einer Ausführung eines zusätzlichen Schritts "zur Speicherung der Prüfplan-Daten" fällt insbesondere, dass eine Speicherung vorbereitet wird, wie zum Beispiel die Hinzufügung eines Sicherheitsmerkmals und/oder von Vergleichsinformation zu den Daten. Alternativ oder zusätzlich kann mit Daten einer Messvorschrift und/oder eines Messplans in dieser Weise vorgegangen werden.

Die Prüfplan-Daten können die für die Ermittlung des Nutzungsumfangs vollständige Informationen enthalten. In vielen Fällen jedoch ist in einem Prüfplan und somit auch in den Prüfplan-Daten nicht die Information enthalten, wie die Messung mittels eines konkreten Koordinatenmessgeräts auszuführen ist. Daher kann insbesondere bei Berücksichtigung der Messgeschwindigkeit der Vermessung von Messpunkten des zu ermittelnden Prüfmerkmals bei der Ermittlung des Nutzungsumfangs diese Information im Prüfplan fehlen. Auch die Anzahl der vermessenen oder zu vermessenden Werkstücke ist üblicherweise nicht Teil des Prüfplans.

Daher können die Prüfplan-Daten zu vollständigen Nutzungsumfang-Daten ergänzt werden, die eine Ermittlung des Nutzungsumfangs ermöglichen, wobei die Nutzungsumfang-Daten gespeichert werden und wobei bei der Speicherung und/oder zur Speicherung der Nutzungsumfang-Daten vorzugsweise ein zusätzlicher Schritt ausgeführt wird, der eine Sicherheit gegen eine Veränderung der Nutzungsumfang-Daten erhöht. Bei dem zusätzlichen Schritt kann es sich insbesondere um den oben erwähnten zusätzlichen Schritt handeln. Selbstverständlich ist es möglich, mehrere zusätzliche Schritte zur Erhöhung der Sicherheit gegen eine Veränderung der Daten auszuführen. Die Prüfplan-Daten können insbesondere durch Daten über die Anzahl der zu ermittelnden oder ermittelten Prüfmerkmale und/oder die Messgeschwindigkeit bei der Vermessung von Messpunkten der Prüfmerkmale ergänzt werden.

Bei dem Datenspeicher, der für die Speicherung der Prüfplan-Daten, optional ergänzt um die Nutzungsumfang-Daten, verwendet wird, kann es sich zum Beispiel um einen Datenspeicher am Standort des zumindest einen Koordinatenmessgeräts handeln. "Am Standort" bedeutet z. B., dass der Datenspeicher sich innerhalb derselben Produktions- und/oder Vermessungsanlage befindet, zum Beispiel einem Standort eines Unternehmens. Insbesondere in Zeiten der Daten-Cloud ist es aber auch möglich, dass die Daten an einem von dem zumindest einen Koordinatenmessgerät entfernten Standort gespeichert sind und/oder es sich bei dem Datenspeicher um einen verteilten Datenspeicher handelt, d. h. die Daten sind physikalisch nicht alle in derselben Speichereinheit gespeichert. Auf die Möglichkeit der redundanten Datenspeicherung an verschiedenen Standorten von Datenspeichern insbesondere zur Sicherung der gespeicherten Daten gegen Veränderung wird noch eingegangen.

Die Prüfplan-Daten, optional ergänzt um die Nutzungsumfang-Daten, ermöglichen die Ermittlung des Nutzungsumfangs bereits vor der Vermessung des oder der Werkstücke. Insbesondere kann der Nutzer des zumindest einen Koordinatenmessgeräts und/oder eine andere Person, Institution und/oder Einrichtung anhand der gespeicherten Prüfplan-Daten, die optional um die Nutzungsumfang-Daten ergänzt sind, nach einer Vermessung des oder der Werkstücke und einer Ermittlung der gemäß dem Prüfplan zu ermittelnden Prüfmerkmale überprüfen, ob der tatsächliche Nutzungsumfang mit dem vor der Vermessung des oder der Werkstücke ermittelten prognostizierten Nutzungsumfang übereinstimmt. Optional kann eine etwaige Abweichung analysiert werden und kann dadurch der Grund für die Abweichung festgestellt werden. Abweichungen können insbesondere auf einer fehlerhaften Ausführung eines Prüfplans beruhen, deren Grund zum Beispiel ein fehlerhafter Messplan und/oder eine fehlerhafte Ermittlung der Prüfmerkmale ist. Bei der Analyse der Abweichung kann daher zum Beispiel so vorgegangen werden, dass die Art und Anzahl der zu ermittelnden und der ermittelten Prüfmerkmale und optional auch die Umstände der Ermittlung überprüft werden. Ein Vorteil dieser Ausführungsform der Erfindung besteht darin, dass normalerweise, wenn keine Abweichung zwischen dem prognostizierten Nutzungsumfang und dem tatsächlichen Nutzungsumfang festgestellt wird, nicht überprüft werden muss, ob die Art und Anzahl der zu ermittelnden und der ermittelten Prüfmerkmale und optional auch die Umstände der Ermittlung übereinstimmen. Lediglich wenn eine Abweichung festgestellt wird, kann die Analyse durchgeführt werden.

Bereits die Ermittlung des tatsächlichen Nutzungsumfangs des zumindest einen Koordinatenmessgeräts, auch ohne die Ermittlung des prognostizierten Nutzungsumfangs, ermöglicht eine objektive Bewertung der Nutzung des Koordinatenmessgeräts oder der Koordinatenmessgeräte. Der Nutzer kann daraus Informationen für eine zukünftige Nutzung ableiten und die zukünftige Nutzung unter Umständen effektiver gestalten. Zum Beispiel kann eine Auslastung des zumindest einen Koordinatenmessgeräts anhand des ermittelten Nutzungsumfangs beurteilt werden. Insbesondere wenn die Geschwindigkeit der Ermittlung des Prüfmerkmals wie andernorts in dieser Beschreibung beschrieben bei der Ermittlung des Nutzungsumfangs berücksichtigt wird, kann anhand des ermittelten Nutzungsumfangs eine zukünftige Vermessung von Werkstücken geplant werden, bei der insbesondere die Auslastung und/oder Nutzungsdauer des zumindest einen Koordinatenmessgeräts auf Basis des ermittelten Nutzungsumfangs ermittelt wird.

Insbesondere ist es auch möglich, den Nutzungsumfang als Maß für den wirtschaftlichen Wert der Nutzung zu verwenden und zum Beispiel die Kosten der Nutzung auf Grundlage des Nutzungsumfangs anzugeben oder als Preis für die Nutzung festzulegen. Wenn auch der prognostizierte Nutzungsumfang ermittelt wurde und somit vorliegt, kann der wirtschaftliche Wert der Nutzung bereits vorab ermittelt werden und kann optional der Preis für die Nutzung vorab berechnet werden. Eine Überprüfung, ob eine Abweichung zwischen dem prognostizierten Nutzungsumfang und dem tatsächlichen Nutzungsumfang vorliegt, ermöglicht es insbesondere sicher zu gehen, dass das zumindest eine Koordinatenmessgerät gemäß dem vorher festgelegten Preis auch tatsächlich genutzt wurde.

Insbesondere wird daher ein Verfahren vorgeschlagen zum Prüfen von Werkstücken auf Basis einer Ermittlung von Koordinaten der Werkstücke unter Verwendung von zumindest einem Koordinatenmessgerät, wobei

- Prüfmerkmale, die aus den Koordinaten der Werkstücke ermittelbar sind, definiert werden oder Informationen über eine Definition der Prüfmerkmale empfangen werden und
- anhand der Prüfmerkmale ein Nutzungsumfang einer Nutzung des zumindest einen Koordinatenmessgeräts ermittelt wird

und wobei,

a) Koordinaten der Werkstücke unter Verwendung von zumindest einem Koordinatenmessgerät ermittelt werden und die Prüfmerkmale aus den ermittelten Koordinaten ermittelt werden, wobei bei der Ermittlung von jedem der Prüfmerkmale die für mehrere Messpunkte und/oder zumindest einen Messbereich des Werkstücks ermittelten Koordinaten verwendet werden, und/oder

b) für zumindest eines der Prüfmerkmale eine Messvorschrift erzeugt wird, die die von einem Koordinatenmessgerät zu vermessenden Messpunkte der Werkstücke vorgibt.

Dem vorgeschlagenen Verfahren entspricht eine Anordnung zum Ermitteln eines Nutzungsumfangs bei der Prüfung von Werkstücken, wobei die Anordnung eine Nutzungsumfang-Ermittlungseinrichtung aufweist, die ausgestaltet ist, anhand von Prüfmerkmalen der Werkstücke einen Nutzungsumfang einer Nutzung zumindest eines Koordinatenmessgeräts zu ermitteln.

Insbesondere kann die Anordnung zum Ermitteln eines Nutzungsumfangs eine Anordnung zum Prüfen von Werkstücken sein, wobei die Nutzungsumfang-Ermittlungseinrichtung eine Schnittstelle zum Empfangen von Messergebnissen einer Vermessung von Werkstücken unter Verwendung von zumindest einem Koordinatenmessgerät aufweist, wobei die Messergebnisse ermittelte Koordinaten der Werkstücke aufweisen, und wobei die Nutzungsumfang-Ermittlungseinrichtung ausgestaltet ist, anhand von Prüfmerkmalen der Werkstücke, bei deren Ermittlung jeweils die ermittelten Koordinaten von mehreren Messpunkten und/oder von zumindest einem Messbereich des Werkstücks verwendet werden oder wurden, einen Nutzungsumfang einer Nutzung des zumindest einen Koordinatenmessgeräts zu ermitteln. Dies ermöglicht es den Nutzungsumfang anhand tatsächlich ermittelter Messergebnisse zu ermitteln.

Nicht nur die Messergebnisse dieser Ausgestaltung der Anordnung oder einer entsprechenden Ausgestaltung des Verfahrens sind insbesondere Roh-Messdaten, die von zumindest einem Sensor eines Koordinatenmessgeräts oder mehrerer Koordinatenmessgeräte durch Vermessung des Werkstücks erhalten werden. Solche Roh-Messdaten können auch als unmittelbares Messergebnis der Vermessung bezeichnet werden. In manchen Fällen werden Roh-Messdaten durch Datenverarbeitung weiterverarbeitet, um konsolidierte Roh-Messdaten zu erhalten, wodurch zum Beispiel Messpunkte von mehrfach vermessenen Teilbereichen des Werkstücks teilweise entfernt und/oder zusammengeführt werden. Aus den Roh-Messdaten oder den konsolidierten Roh-Messdaten werden dann insbesondere die für die Ermittlung der vordefinierten Prüfmerkmale erforderlichen Messpunkte ermittelt. Die in diesem Absatz beschriebene Verfahrensweise kann insbesondere auch vorab simuliert werden.

Eine weitere Ausführungsform der Anordnung zum Ermitteln eines Nutzungsumfangs kann alternativ oder zusätzlich zu der Anordnung zum Prüfen von Werkstücken eine Anordnung zur Simulation der Prüfung von Werkstücken sein. Dabei hat die Nutzungsumfang-Ermittlungseinrichtung eine Schnittstelle zum Empfangen von Informationen über eine geplante Vermessung von Werkstücken unter Verwendung von zumindest einem Koordinatenmessgerät, wobei die Nutzungsumfang-Ermittlungseinrichtung ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts zu ermitteln. Dies ermöglicht es insbesondere, vor und/oder während der Vermessung von Werkstücken den Nutzungsumfang zu ermitteln.

In weiterer Ausgestaltung ist die Anordnung eine Anordnung zur Erzeugung einer Messvorschrift ist, wobei die Nutzungsumfang-Ermittlungseinrichtung eine Schnittstelle zum Empfangen von Informationen über eine geplante Vermessung von Werkstücken unter Verwendung von zumindest einem Koordinatenmessgerät aufweist, wobei die Nutzungsumfang-Ermittlungseinrichtung ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts zu ermitteln, und wobei eine Messvorschrift-Erzeugungseinrichtung der Anordnung ausgestaltet ist, aus den Prüfmerkmalen eine Messvorschrift zu erzeugen, die vorgibt, welche Messpunkte eines Werkstücks von einem Koordinatenmessgerät zu vermessen sind.

Es ist insbesondere möglich, dass die Messvorschrift-Erzeugungseinrichtung die Messvorschrift automatisch erzeugt oder eine für die zu ermittelnden Prüfmerkmale oder ähnliche Prüfmerkmale vorliegende Messvorschrift verändert und insbesondere verbessert, zum Beispiel wenn die Messvorschrift-Erzeugungseinrichtung Künstliche Intelligenz (KI) aufweist. Alternativ oder zusätzlich ist es möglich, dass die Messvorschrift-Erzeugungseinrichtung eine Schnittstelle zur Interaktion mit einem menschlichen Benutzer aufweist und der Benutzer zur Erzeugung der Messvorschrift beiträgt, insbesondere indem er Vorgaben in Bezug auf die Eigenschaften der Messvorschrift macht und/oder von der Messvorschrift-Erzeugungseinrichtung vorgeschlagene Eigenschaften der Messvorschrift ablehnt.

Insbesondere kann die Nutzungsumfang-Ermittlungseinrichtung den Nutzungsumfang auf Basis gespeicherter Daten ermitteln bzw. kann bei einer Ausgestaltung des Verfahrens auf dieser Basis der Nutzungsumfang ermittelt werden, wobei die gespeicherten Daten alle erforderlichen Informationen oder einen Teil der für die Ermittlung des Nutzungsumfangs erforderlichen Informationen enthalten können. Vor, während und/oder nach der Speicherung der Daten wird vorzugsweise ein Schritt ausgeführt, mit der eine Sicherheit gegen eine Veränderung der Daten erhöht wird. Insbesondere können die gespeicherten Daten die Informationen über die ermittelten oder die zu ermittelnden Prüfmerkmale aufweisen. Wenn die gespeicherten Daten nur einen Teil der erforderlichen Informationen enthalten, kann über zumindest eine Schnittstelle der fehlende Teil der erforderlichen Informationen von der Nutzungsumfang-Ermittlungseinrichtung empfangen werden. Insbesondere dies ermöglicht die Verfahrensweise, einmalig oder wiederholt, insbesondere fortlaufend, Informationen für die Ermittlung des Nutzungsumfangs zu erhalten und diese bei der Ermittlung zu berücksichtigen. Zum Beispiel kann daher, insbesondere im Fall der Ermittlung des Nutzungsumfangs auf Basis tatsächlicher Ergebnisse der Vermessung von Werkstücken, der ermittelte Nutzungsumfang wiederholt verändert werden, d. h. er kann sich insbesondere wiederholt erhöhen, weil die Nutzung fortgesetzt stattfindet. Die gespeicherten Daten können aber alternativ oder zusätzlich insbesondere dazu verwendet werden zu überprüfen, ob ein auf Basis tatsächlicher Ergebnisse der Vermessung von Werkstücken ermittelter Nutzungsumfang einem erwarteten Nutzungsumfang entspricht. Die gespeicherten Daten enthalten in diesem Fall Informationen über den erwarteten Nutzungsumfang, zum Beispiel die zu ermittelnden Prüfmerkmale und optional weitere Einflussgrößen, auf die im Folgenden eingegangen wird.

Wie im Folgenden näher ausgeführt wird, kann die Nutzungsumfang-Ermittlungseinrichtung außer den ermittelten und/oder zu ermittelnden Prüfmerkmalen weitere Einflussgrößen bei der Ermittlung des Nutzungsumfangs berücksichtigen bzw. werden bei einer Ausgestaltung des Verfahrens bei der Ermittlung des Nutzungsumfangs weitere Einflussgrößen berücksichtigt, wie die Anzahl der ermittelten oder zu ermittelnden Prüfmerkmale und/oder Umstände der Ermittlung der Prüfmerkmale.

Insbesondere kann bei der Ermittlung des Nutzungsumfangs eine Anzahl der ermittelten Prüfmerkmale berücksichtigt werden. Unter der Anzahl kann sowohl die Anzahl verschiedener Arten von Prüfmerkmale als auch die Anzahl von Werkstücken verstanden werden, für die zumindest ein Prüfmerkmal ermittelt wird oder ermittelt werden soll. Zum Beispiel kann es ein Prüfplan vorsehen, für jedes zu vermessende Werkstück eine Mehrzahl von Prüfmerkmalen zu ermitteln, wobei zumindest zwei der Mehrzahl von Prüfmerkmalen verschiedener Art sind, beispielsweise eine erste Art die Parallelität zweier Flächen des Werkstücks betrifft und eine zweite Art die Zylindrizität einer Bohrung in dem Werkstück betrifft. Es kann auch zumindest eine Art von Prüfmerkmalen Teil des Prüfplans sein, das für jedes Werkstück mehrfach zu bestimmen ist, insbesondere für verschiedene Bereiche des Werkstücks. Der Nutzungsumfang kann entweder ohne Berücksichtigung der Art des Prüfmerkmals oder mit Berücksichtigung der Art des Prüfmerkmals auf Basis der Anzahl ermittelt werden. Wenn die Art des Prüfmerkmals nicht berücksichtigt wird, kann Nutzungsumfang proportional zur Anzahl der vermessenen oder zu vermessenden Werkstücke und proportional zur Anzahl der für jedes Werkstück zu ermittelnden oder ermittelten Prüfmerkmale sein. Wenn die Art des Prüfmerkmals berücksichtigt wird, kann der Nutzungsumfang proportional zur Anzahl der vermessenen oder zu vermessenden Werkstücke sein und kann jede der verschiedenen Arten der Prüfmerkmale, die ermittelt werden oder zu ermitteln sind, unterschiedlich zum Nutzungsumfang beitragen. Zum Beispiel kann eine erste Art von Prüfmerkmalen größeren Messaufwand erfordern als eine zweite Art von Prüfmerkmal, weil für die erste Art eine größere Anzahl von Messpunkten erforderlich ist.

Allgemeiner formuliert wird daher eine optionale Ausgestaltung vorgeschlagen, bei der die Art von Prüfmerkmalen berücksichtigt wird: es sind verschiedene Arten von Prüfmerkmalen definiert, wobei für jede der Arten von Prüfmerkmalen ein individueller Nutzungswert vorgegeben ist oder wird und wobei bei der Ermittlung des Nutzungsumfangs der individuelle Nutzungswert der ermittelten Prüfmerkmale berücksichtigt wird.

Alternativ oder zusätzlich zu der Berücksichtigung der Anzahl und/oder Art der Prüfmerkmale kann die Toleranz der ermittelten oder zu ermittelnden Prüfmerkmale berücksichtigt werden. Insbesondere kann zumindest eines der vordefinierten Prüfmerkmale bei unterschiedlicher erlaubter Toleranz ermittelbar sein und kann bei der Ermittlung des Nutzungsumfangs jeweils die Toleranz der ermittelten Prüfmerkmale berücksichtigt werden. Wenn Arten von Prüfmerkmalen jeweils lediglich bei einer einzigen Toleranz ermittelbar sind, die aber bei verschiedenen Arten von Prüfmerkmalen unterschiedlich ist, können die unterschiedlichen Toleranzen der Arten von Prüfmerkmalen insbesondere über den individuellen Nutzungswert der Art berücksichtigt werden. Wenn dagegen zumindest eine Art von Prüfmerkmalen bei unterschiedlicher Toleranz ermittelbar ist, und daher zum Beispiel für eine Messaufgabe je nach Toleranz präziser oder weniger präzise messende Koordinatenmessgerät verwendet werden müssen, dann ist der Nutzungswert vorzugsweise größer, wenn die Toleranz kleiner ist. Bevorzugt wird, dass für unterschiedliche Toleranzen des Prüfmerkmals jeweils ein individueller Nutzungswert vorgegeben ist. Insbesondere kann jedem Prüfmerkmal, das bei unterschiedlicher Toleranz ermittelbar ist, ein von der Toleranz abhängiger Nutzungswert zugeordnet sein. Der konkrete Nutzungswert ist daher festgelegt, sobald feststeht, bei welcher Toleranz das Prüfmerkmal ermittelt werden soll (im Falle eines zukünftig zu ermittelnden Prüfmerkmals) bzw. bei welcher Toleranz das Prüfmerkmal ermittelt wurde. Der Nutzungswert kann mathematisch betrachtet gemäß einer Stufenfunktion von der Toleranz abhängig sein, d. h. Toleranzwerte in Toleranzbereichen bzw. Toleranzklassen führen jeweils zu demselben Nutzungswert.

Ferner kann zumindest eines der vordefinierten Prüfmerkmale mit unterschiedlicher Geschwindigkeit ermittelbar sein. Unter der Geschwindigkeit der Ermittlung ist hier nicht oder nicht nur die Geschwindigkeit der Berechnung des Prüfmerkmals zu verstehen, sondern die Geschwindigkeit desjenigen Teils der Vermessung eines Werkstücks, der die vollständige Information für die spätere Ermittlung des Prüfmerkmals erbringt. Dies ermöglicht es, bei der Ermittlung des Nutzungsumfangs jeweils die Geschwindigkeit der Ermittlung des Prüfmerkmals zu berücksichtigen. Wiederum ist es zum Beispiel möglich, verschiedene Nutzungswerte vorzugeben, die in diesem Fall jeweils einem erreichbaren Geschwindigkeitswert oder Geschwindigkeitsbereich zugeordnet sind. Wenn feststeht, mit welcher Geschwindigkeit derjenige Teil der Vermessung, der für die Ermittlung des Prüfmerkmal erforderlich ist, eines Werkstücks ausgeführt wurde oder ausgeführt werden soll, wird der zugeordnete Nutzungswert bei der Ermittlung des Nutzungsumfangs berücksichtigt. Bevorzugt wird, dass einem höheren Geschwindigkeitswert ein höherer Nutzungswert als einem niedrigeren Geschwindigkeitswert zugeordnet ist, d.h. der Nutzungswert ist umso größer, je größer die Geschwindigkeit ist, insbesondere bei gleichbleibender Messgenauigkeit und gleichbleibendem Informationsgehalt der Vermessung des Werkstücks. Dabei ist es wie erwähnt möglich, dass einem oder mehreren Geschwindigkeitsbereichen ein konstanter Nutzungswert zugeordnet ist, d. h Geschwindigkeitswerten innerhalb desselben Geschwindigkeitsbereichs ist derselbe Nutzungswert zugeordnet. Unter der Berücksichtigung der Geschwindigkeit wird auch verstanden, dass die Dauer der Vermessung berücksichtigt wird. Die Geschwindigkeit des Prozesses der Vermessung eines Werkstücks, die für die Ermittlung des Prüfmerkmals erforderlich ist, ist gleich dem Kehrwert der Dauer (des Zeitintervalls) der Vermessung. In Bezug auf die oben erwähnte Zuordnung eines Nutzungsumfangs ist daher der Nutzungswert umso größer je kürzer die Dauer der Vermessung ist.

Alternativ oder zusätzlich kann die Geschwindigkeit bzw. Dauer für die Ermittlung des Prüfmerkmals wie bereits erwähnt auf die Berechnung des Prüfmerkmals bezogen sein. Insbesondere erfordert ein komplexes Prüfmerkmal und/oder ein Prüfmerkmal, bei dessen Ermittlung die Koordinaten einer höheren Anzahl von Messpunkten zu berücksichtigen sind, mehr Rechenressourcen, zum Beispiel eines einzelnen Computers oder eines Computernetzwerks, als ein einfaches Prüfmerkmal und/oder ein Prüfmerkmal, bei dessen Ermittlung die Koordinaten einer geringeren Anzahl von Messpunkten zu berücksichtigen sind. Insbesondere kann die oben bereits erwähnte Zuordnung eines Nutzungswertes zu der Geschwindigkeit daher zumindest auch in Bezug auf die Geschwindigkeit der Berechnung des Prüfmerk-

EP 4 036 519 A1

mals stattfinden.

Alternativ oder zusätzlich zu der Berücksichtigung der genannten Umstände der Ermittlung der Prüfmerkmale kann die Nutzung der Daten über die ermittelten Prüfmerkmale, d. h. die Daten, die alle Informationen über die ermittelten Prüfmerkmale enthalten, bei der Ermittlung des Nutzungsumfangs berücksichtigt werden. Es wird dazu vorgeschlagen, dass, wenn eine Speicherung von Daten über die ermittelten Prüfmerkmale in einem Datenspeicher stattfindet und zumindest einmal ein Auslesen oder teilweises Auslesen der Daten aus dem Datenspeicher stattfindet, bei der Ermittlung des Nutzungsumfangs die Speicherung der Daten berücksichtigt wird und jeweils das Auslesen der Daten oder das teilweise Auslesen der Daten berücksichtigt wird. Insbesondere wiederholtes Auslesen der Daten erhöht daher den ermittelten Nutzungsumfang.

Oben wurde an verschiedenen Stellen erwähnt, dass in Bezug auf Daten, die gespeichert werden sollen, gespeichert werden und/oder gespeichert sind, ein zumindest zusätzlicher Schritt ausgeführt wird, mit dem die Sicherheit gegen eine Veränderung der Daten erhöht wird. Bei diesen Daten kann es sich insbesondere um die erwähnten Prüfplan-Daten, Nutzungsumfang-Daten und/oder die Daten handeln, die alle erforderlichen Informationen oder einen Teil der für die Ermittlung des Nutzungsumfangs erforderlichen Informationen enthalten.

Insbesondere kann während der Erzeugung der Daten und/oder während der Speicherung der Daten fortlaufend ein Logfile geschrieben werden. Alternativ oder zusätzlich kann für die erzeugten Daten und/oder die gespeicherten Daten eine Prüfsumme erzeugt werden. Das Logfile und/oder die Prüfsumme werden vorzugsweise separat von den Daten gespeichert, zum Beispiel auf einem anderen Server. Anhand des Logfiles und/oder der Prüfsumme kann später die Veränderung der Daten festgestellt werden.

Ferner kann zur Erzeugung und/oder Speicherung der Daten ein Blockchain-System genutzt werden. Außer dem Nutzer des zumindest einen Koordinatenmessgeräts kann an dem System zumindest ein weiterer Dienstleister beteiligt sein, bei dem es sich zum Beispiel um den Hersteller oder Lieferanten des zumindest einen Koordinatenmessgeräts handeln kann oder um einen anderen Dienstleister. Technisch betrachtet ist daher zumindest ein erster Knoten des Blockchain-Systems vorhanden, auf den der Nutzer des zumindest einen Koordinatenmessgeräts Zugriff hat. Wenn mehr als ein Koordinatenmessgerät für die Vermessung von Werkstücken genutzt wird und der Nutzungsumfang für diese Koordinatenmessgeräte ermittelt werden soll, haben eventuell vorhandene verschiedene Nutzer der Koordinatenmessgeräte vorzugsweise Zugriff auf denselben ersten Knoten. Der zumindest eine weitere Dienstleister betreibt einen weiteren Knoten des Blockchain-Systems. Auf den Datenspeichern der Knoten sind jeweils die gegen Veränderung zu sichernden Daten gespeichert. Im Rahmen des Blockchain-Systems findet zumindest einmalig und vorzugsweise wiederholt eine Prüfung statt, ob die auf den Knoten gespeicherten Daten miteinander übereinstimmen. Wenn dies nicht der Fall ist, kann analysiert werden, welche Teile der Daten nicht übereinstimmen und wie es zu der Veränderung gekommen ist. Vorzugsweise handelt es sich bei dem Knoten des weiteren Dienstleisters oder eines der weiteren Dienstleister um einen "Trusted Node", d. h. um einen Knoten mit besonderer Vertrauenswürdigkeit. Die Daten auf dem Datenspeicher dieses Knotens können daher als vertrauenswürdige Referenz für die auf anderen Knoten gespeicherten Daten herangezogen werden.

Gemäß dem Verkettungsprinzip der Blockchain-Technologie können die Daten insbesondere während des fortlaufenden Prozesses ihrer Erzeugung und/oder Speicherung als fortlaufende Daten-Blöcke miteinander verkettet werden. Zum Beispiel kann eine Mehrzahl von Blöcken jeweils zumindest ein Prüfmerkmal des Prüfplans und/oder ein ermitteltes Prüfmerkmal aufweisen.

Im Gegensatz zu der bei der Handhabung von Kryptowährungen genutzten Variante der Blockchain-Technologie muss nicht zwischen Knoten des Blockchain-Systems Konsens bei der Erzeugung der Blöcke bestehen oder hergestellt werden. Vielmehr reicht es aus, wenn nach der Erzeugung eines Blocks oder einer Mehrzahl von Blöcken, der/die an die bisherige Kette von Blöcken anzuhängen ist/sind, jedoch vor einem definierten Ereignis, eine vollständige Kopie der durch den erzeugten Block oder die erzeugte Mehrzahl von Blöcken ergänzte Kette auf zumindest einem weiteren Knoten des Blockchain-Systems gespeichert wird. Das definierte Ereignis kann zum Beispiel der Abschluss der Erzeugung und/oder Speicherung der Prüfplan-Daten (optional ergänzt durch die Nutzungsumfang-Daten) sein, eine Ermittlung einer vorgegebenen Anzahl von Prüfmerkmalen oder der Abschluss der Ermittlung der Prüfmerkmale.

Durch an sich bekannte kryptografische Verfahren können die gespeicherten Daten zusätzlich gegen Manipulation oder sonstige Veränderung gesichert werden.

Ausführungsbeispiele der Erfindung werden nun unter Bezugnahme auf die beigefügte Zeichnung beschrieben. Die einzelnen Figuren der Zeichnung zeigen:

Fig. 1   schematisch eine Anordnung mit einem Koordinatenmessgerät, einer Planungseinrichtung und einer Auswertungseinrichtung,

Fig. 2   ein Blockdiagramm mit Einrichtungen zur Vorbereitung und Durchführung einer Werkstück-Vermessung, die ausgestaltet ist, einen Nutzungsumfang der Nutzung zumindest eines Koordinatenmessgeräts zu ermitteln,

Fig. 3   ein Blockdiagramm zur Veranschaulichung eines allgemeinen Verfahrens zur Ermittlung eines Nutzungsumfangs zum Beispiel durch Betrieb der Anordnung gemäß Fig. 2,

Fig. 4 ein Flussdiagramm zur Darstellung eines Verfahrens zum Prüfen von Werkstücken, bei dem ein Nutzungsumfang der Nutzung zumindest eines Koordinatenmessgeräts vor der Nutzung ermittelt wird,

Fig. 5 ein Flussdiagramm zur Darstellung eines Verfahrens zum Prüfen von Werkstücken, bei dem ein Nutzungsumfang der Nutzung zumindest eines Koordinatenmessgeräts nach der Prüfung anhand tatsächlicher Messergebnisse der Nutzung ermittelt wird,

Fig. 6 ein Flussdiagramm zur Darstellung eines Verfahrens zum Prüfen von Werkstücken, bei dem ein Nutzungsumfang der Nutzung zumindest eines Koordinatenmessgeräts sowohl vor der Nutzung als auch nach der Nutzung ermittelt wird,

Fig. 7 ein Blockdiagramm zur Darstellung einer Anordnung, die ausgestaltet ist, im Fall der Ermittlung des Nutzungsumfangs sowohl vor der Nutzung als auch nach der Nutzung zu prüfen, ob der prognostizierte Nutzungsumfang und der tatsächliche Nutzungsumfang voneinander abweichen,

Fig. 8 ein Flussdiagramm zur Darstellung eines Verfahrens, bei dem Schritte zur Erhöhung einer Sicherheit gegen eine Veränderung zu speichernder und/oder gespeicherter Daten ausgeführt werden, und

Fig. 9 ein Ausführungsbeispiel der Erzeugung einer Messvorschrift, die die Anzahl und Position von Messpunkten vorgibt, welche zur Ermittlung eines Prüfmerkmals zu messen sind.

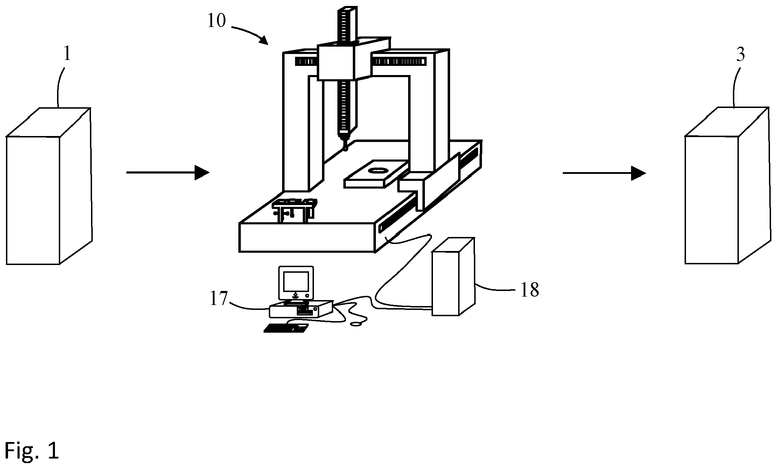

Fig. 1 zeigt eine Anordnung mit einer Planungseinrichtung 1, einem Koordinatenmessgerät 10 und einer Auswertungseinrichtung 3. In dem konkret dargestellten Ausführungsbeispiel weist das Koordinatenmessgerät 10 eine Steuerung 18 auf und es ist ein Rechner, zum Beispiel ein Personal Computer, mit der Steuerung 18 verbunden. Die Steuerung 18 steuert den Betrieb des Koordinatenmessgeräts 10, insbesondere Bewegungen eines Messsensors des Koordinatenmessgeräts 10, um zumindest ein Werkstück in einem Messbereich des Koordinatenmessgeräts 10 zu vermessen und dadurch Koordinaten des Werkstücks zu ermitteln. Die Steuerung 18 ist insbesondere ausgestaltet, in einem konkreten Messplan enthaltene Vorgaben für die Vermessung des zumindest einen Werkstücks in Steuerbefehle zur Steuerung des Koordinatenmessgeräts 10 umzusetzen. Die Steuerbefehle bewirken insbesondere eine Relativbewegung eines Messsensors relativ zu dem Werkstück oder den Werkstücken im Messbereich. Es kann sich zu jedem Zeitpunkt lediglich ein Werkstück im Messbereich des Koordinatenmessgeräts 10 befinden. Alternativ kann sich zumindest zeitweise eine Mehrzahl von zu vermessenden Werkstücken in dem Messbereich befinden. Insbesondere kann eine Mehrzahl von Werkstücken nacheinander von dem Koordinatenmessgerät 10 vermessen werden. Von Interesse ist dabei insbesondere, den Nutzungsumfang bei der Vermessung der Mehrzahl von Werkstücken zu ermitteln. Wenn zumindest eine Teilanzahl der Mehrzahl von Werkstücken typgleich ist, kann die Vermessung jedes der typgleichen Werkstücke gemäß demselben Prüfplan und gemäß demselben Messplan durchgeführt werden.

Obwohl in Fig. 1 schematisch ein Koordinatenmessgerät 10 in Portalbauweise dargestellt ist, kann zur Ausführung des Messplans ein beliebiges Koordinatenmessgerät anderer Art verwendet werden. In jedem Fall kann Personal über den in Fig. 1 dargestellten Rechner 17 mit dem Koordinatenmessgerät 10 interagieren, zum Beispiel zusätzliche Messpunkte vorgegeben und/oder einen Betrieb des Koordinatenmessgeräts 10 zur Vermessung zumindest eines Werkstücks zu starten oder zu beenden.

Die in Fig. 1 dargestellte Planungseinrichtung 1 ist ausgestaltet, eine Vermessung des zumindest einen Werkstücks zu planen. Zur Planung können insbesondere die Erstellung eines Prüfplans, die Erstellung einer Messvorschrift und die Erstellung zumindest eines Messplans zu gehören. Diese möglichen Ergebnisse der Planung wurden bereits oben beschrieben. Dabei kann die Planungseinrichtung 1 aus verschiedenen Teileinrichtungen bestehen, wobei sich die Teileinrichtungen auch an verschiedenen Orten befinden können. Daher hier es ist möglich, wie im Folgenden noch näher beschrieben wird, zunächst mit einer Teileinrichtung einen Prüfplan zu erstellen und dann auf Basis des Prüfplans mit einer anderen Teileinrichtung eine Messvorschrift und/oder einen Messplan zu erstellen. Durch den in Fig. 1 dargestellten Pfeil, der von der Planungseinrichtung 1 zu dem Koordinatenmessgerät 10 weist, ist angedeutet, dass ein Plan zur Vermessung des zumindest einen Werkstücks, insbesondere ein Messplan, zu dem Koordinatenmessgerät 10 übertragen wird, insbesondere zu der Steuerung 18. Unter der Übertragung eines Plans zur Vermessung eines Werkstücks wird auch verstanden, dass Steuerungsinformation gemäß dem Plan übertragen wird.

Die in Fig. 1 dargestellte Auswertungseinrichtung 3 ist ebenfalls mit dem Koordinatenmessgerät 10 verbunden. Über die Verbindung werden Koordinaten von Messpunkten oder Messbereichen der vermessenden Werkstücke zu der Auswertungseinrichtung 3 übertragen. Die Auswertungseinrichtung 3 ist insbesondere ausgestaltet, aus den Koordinaten Prüfmerkmale zu ermitteln, deren Ermittlung gemäß dem Prüfplan und/oder gemäß dem Messplan vorgegeben ist, der von der Planungseinrichtung 1 erzeugt wurde.

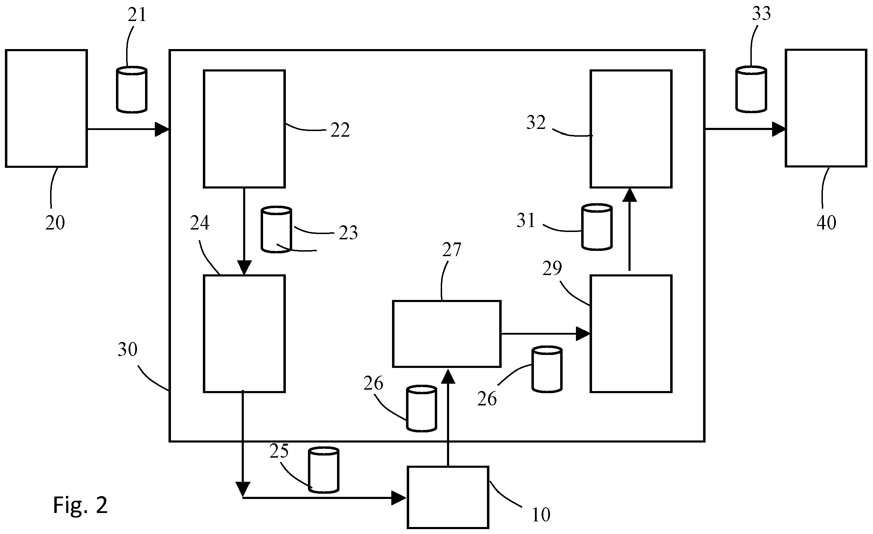

Das anhand von Fig. 1 beschriebene Prinzip der Planung einer Vermessung von Werkstücken, der Vermessung der Werkstücke und der Auswertung der durch die Vermessung erhaltenen Koordinaten kann in unterschiedlicher Weise in die Praxis umgesetzt werden. Eine Anordnung zur Umsetzung ist in Fig. 2 dargestellt.

Eine Prüfplan-Erzeugungseinrichtung 20 der Anordnung ist mit einer Vermessungsanordnung 30 verbunden, welche wiederum mit einer Aufbereitungseinrichtung 40 verbunden ist. Die Prüfplan-Erzeugungseinrichtung 20 ist zum Beispiel ausgestaltet, einen Prüfplan 21 auf Basis von CAD (Computer Aided Design) Daten des zu vermessenden Typs von Werkstücken zu erzeugen, insbesondere gesteuert durch Software und realisiert durch zumindest einen Computer. Die Vermessungsanordnung 30 weist eine erste Messplan-Erzeugungseinrichtung 22 auf, welche ausgestaltet ist, den von der Prüfplan-Erzeugungseinrichtung 20 erzeugten Prüfplan 21 zu empfangen und daraus einen allgemeinen Messplan 23 zur Vermessung eines Typs von Werkstücken zu erzeugen. Der allgemeine Messplan 23 enthält insbesondere gegenüber dem Prüfplan 21 zusätzliche Planungsinformation, die jedoch noch nicht auf die Verwendung eines bestimmten Typs von Koordinatenmessgeräten bezogen ist. Zum Beispiel kann der allgemeine Messplan 23 jedoch bereits Information darüber enthalten, Koordinaten welcher Messpunkte und/oder Messbereiche der Werkstücke und/oder in welcher Reihenfolge die Messpunkte und/oder Messbereiche erfasst werden sollen. Bei dem allgemeinen Messplan 23 kann es sich daher insbesondere um eine Messvorschrift der oben bereits beschriebenen Art handeln, durch die Anzahl und Position von Messpunkten vorgegeben ist.

Bei anderen Ausführungsformen können die CAD Daten bereits die zu ermittelnden Prüfmerkmale enthalten. Auf eine Prüfplan-Erzeugungseinrichtung kann in diesem Fall verzichtet werden oder die Prüfplan-Erzeugungseinrichtung 20 ergänzt die Prüfmerkmale um weitere Planungsinformation wie z. B. jeweils die erlaubte Toleranz des Prüfmerkmals.

Zurückkommend auf die anhand von Fig. 2 beschriebene Ausführungsform ist die erste Messplan-Erzeugungseinrichtung mit einer zweiten Messplan-Erzeugungseinrichtung 24 verbunden, die ausgestaltet ist, aus dem allgemeinen Messplan 23 einen konkreten Messplan 25 zu erzeugen. Der konkrete Messplan 25 enthält Informationen darüber, wie der Typ von Werkstücken mittels eines konkreten Typs von Koordinatenmessgeräten zu vermessen ist. Insbesondere enthält der konkrete Messplan 25 daher Informationen, die von einer Steuerung eines Koordinatenmessgeräts des konkreten Typs in Steuerbefehle zum Betrieb des Koordinatenmessgeräts umgesetzt werden können. Der konkrete Messplan 25 ist daher insbesondere von der oben bereits beschriebenen Art. Die Steuerbefehle betreffen insbesondere die Bewegung eines oder mehrerer Messsensoren relativ zu einem Werkstück. Die zweite Messplan-Erzeugungseinrichtung ist mit einem Koordinatenmessgerät 10 verbunden, bei dem es sich um das in Fig. 1 dargestellte Koordinatenmessgerät 10 handeln kann. Über die Verbindung werden zumindest Informationen über den konkreten Messplan 25 zu dem Koordinatenmessgerät 10 übertragen, die für eine Vermessung eines Werkstücks durch das Koordinatenmessgerät 10 ausreichen.

Das Koordinatenmessgerät 10 ist nicht Teil der Vermessungsanordnung 30, welche zum Beispiel durch einen Computer oder ein Computer-Netzwerk realisiert werden kann, wobei der Computer oder das Computer-Netzwerk vorzugsweise entsprechende Computersoftware aufweist, die den Computer oder das Computer-Netzwerk derart steuert, dass die Funktionen der hier beschriebenen Einrichtungen 22, 24, 26, 29, 32 der Vermessungsanordnung 30 erzielt werden.

Das Koordinatenmessgerät 10 ist mit einer Daten-Empfangseinrichtung 27 der Vermessungsanordnung 30 verbunden, die ausgestaltet ist, Messdaten 26 des Koordinatenmessgeräts 10 zu empfangen, wobei die Messdaten 26 insbesondere Informationen über die Koordinaten der Messpunkte und/oder Messbereiche des vermessenen Werkstücks oder der vermessenen Werkstücke aufweisen. Die Daten-Empfangseinrichtung 27 ist mit einer Daten-Verarbeitungseinrichtung 29 verbunden, die ausgestaltet ist, die Messdaten 26 zu verarbeiten. Die Verarbeitung kann insbesondere beinhalten, dass aus den als Rohdaten zu bezeichnenden Messdaten 26 geräteunabhängige Messdaten 31 erzeugt werden. Der Begriff "geräteunabhängig" bedeutet dabei, dass die Messdaten 31 nicht mehr allein auf das Koordinatenmessgerät 10 bzw. dessen Typ bezogen sind. Zum Beispiel werden aus den geräteabhängigen Messdaten 26 Messdaten 31 erzeugt, die auf ein Koordinatensystem des vermessenen Werkstücks bezogen sind. Bei diesem Koordinatensystem kann es sich auch um ein Koordinatensystem nicht des konkret vermessenen Werkstücks, sondern des Werkstück-Typs handeln, zum Beispiel eines Koordinatensystems eines CAD (Computer Aided Design) Modells des Werkstück-Typs.

Die Daten-Verarbeitungseinrichtung 29 ist mit einer Prüfmerkmal-Ermittlungseinrichtung 32 verbunden, welche ausgestaltet ist, die geräteunabhängigen Messdaten 31 zu empfangen und daraus die Prüfmerkmale gemäß dem Prüfplan 21 zu ermitteln. Die Ermittlung der Prüfmerkmale bezieht sich auf das konkrete vermessene Werkstück.

In dem beschriebenen Ausführungsbeispiel arbeiten die erste Messplan-Erzeugungseinrichtung 22 und die Prüfmerkmal-Ermittlungseinrichtung 32 geräteunabhängig, während die zweite Messplan-Erzeugungseinrichtung 24 und die Daten-Verarbeitungseinrichtung 29 gerätespezifisch, bezogen auf das Koordinatenmessgerät 10 bzw. dessen Typ arbeiten bzw. entsprechend ausgestaltet sind.

Abweichend von der in Fig. 2 beschriebenen Anordnung oder in Ergänzung der in Fig. 2 beschriebenen Anordnung kann zum Beispiel eine Simulationseinrichtung vorhanden sein, die Teil der ersten Messplan-Erzeugungseinrichtung 22 sein kann oder zusätzlich zu der ersten Messplan-Erzeugungseinrichtung 22 vorgesehen sein kann. Die Simulationseinrichtung, welche zum Beispiel ebenfalls durch zumindest einen Computer und entsprechende Computersoftware realisiert werden kann, ist ausgestaltet, die Vermessung eines Werkstücks des zu vermessenden Typs zu simulieren. Insbesondere kann ein Nutzer der Anordnung abhängig von dem Ergebnis der Simulation entscheiden, ob die Vermessung des Werkstücks oder der Werkstücke des zu vermessenden Typs in der simulierten Weise und/oder in anderer Weise ausgeführt wird. Insbesondere kann die Simulationseinrichtung auch völlig separat von den anderen

Insbesondere ist es alternativ oder zusätzlich möglich, dass zum Beispiel auf einem Computer oder Computernetzwerk eine Applikationssoftware betrieben wird, die die Messplan-Erzeugungseinrichtung 22 realisiert, und dadurch eine Messvorschrift erzeugt wird, durch die für zumindest ein vordefiniertes Prüfmerkmal oder von der Messplan-Erzeugungseinrichtung 22 definiertes Prüfmerkmal Anzahl und Position von Messpunkten des zu vermessenden Werkstücks vorgegeben wird. Anders als in Fig. 2 dargestellt kann die Messplan-Erzeugungseinrichtung 22 auch als eine separate Einrichtung realisiert und betrieben werden. Insbesondere ist es daher auch möglich, dass die Messplan-Erzeugungseinrichtung 22 mit anderen als den in Fig. 2 dargestellten Einrichtungen verbunden ist und zusammenwirkt.

Zurückkommend auf die in Fig. 2 dargestellte Anordnung ist die Prüfmerkmal-Ermittlungseinrichtung 32 mit einer Aufbereitungseinrichtung 40 verbunden, welche ausgestaltet ist, Prüfmerkmaldaten 33 zu empfangen und Messergebnisse der Vermessung zumindest eines Werkstücks aufzubereiten. Insbesondere kann die Aufbereitungseinrichtung 40 ausgestaltet sein, die Prüfmerkmaldaten 33 von einer Mehrzahl durch das Koordinatenmessgerät 10 vermessenen Werkstücke aufzubereiten. Insbesondere kann die Aufbereitungseinrichtung 40 Schwankungen der für die Mehrzahl von Werkstücken ermittelten Prüfmerkmale ermitteln. Zum Beispiel sind für jedes Prüfmerkmal ein Mittelwert und eine Schwankungsbreite mögliche Ergebnisse der Aufbereitung.

Anhand von Fig. 2 wurde eine Anordnung zur Vorbereitung und Durchführung einer Werkstück-Vermessung beschrieben, wobei funktionale Ausgestaltungen der Einrichtungen der Anordnung erläutert wurden. Fig. 2 kann jedoch auch als Blockdiagramm zur Erläuterung von Verfahrensschritten bei der Vorbereitung und Durchführung der Werkstück-Vermessung aufgefasst werden. In diesem Fall entspricht jeder rechteckige Block, der als Einrichtung beschrieben wurde, einem Verfahrensschritt. Demnach wird in einem Verfahrensschritt 20 ein Prüfplan 21 erzeugt, aus dem in einem folgenden Verfahrensschritt 22 ein allgemeiner Messplan 23 erzeugt wird, und so weiter.

Wie im Folgenden noch näher beschrieben wird, kann ein Nutzungsumfang der Nutzung eines oder mehrerer Koordinatenmessgeräte, wie beispielsweise des Koordinatenmessgeräts 10 aus Fig. 1 oder Fig. 2, durch unterschiedliche Ausführungsformen des in dieser Beschreibung beschriebenen Verfahrens ermittelt werden. Bezogen auf die Darstellung der Fig. 2 kann beispielsweise bereits anhand des Prüfplans 21, zum Beispiel durch die Prüfplan-Erzeugungseinrichtung 20 oder durch eine andere Einrichtung (zum Beispiel durch die erste Messplan-Erzeugungseinrichtung 22), die den Prüfplan 21 auswertet, der Nutzungsumfang jedenfalls bei der Vermessung eines einzelnen Werkstücks gemäß dem Prüfplan 21 ermittelt werden. Alternativ oder zusätzlich kann der Nutzungsumfang auf Basis der tatsächlichen Messergebnisse der Vermessung zumindest eines Werkstücks gemäß dem Prüfplan 21 ermittelt werden, zum Beispiel von der Prüfmerkmal-Ermittlungseinrichtung 32 oder der Aufbereitungseinrichtung 40 oder von einer anderen Einrichtung.

Bereits vor der Beschreibung der Figuren wurde eine Prüfmerkmal-Ermittlungseinrichtung erwähnt. Die Beschreibung der Fig. 2 ist nicht so zu verstehen, dass bei jeder Ausgestaltung des Verfahrens oder jeder Anordnung zur Prüfung von Werkstücken die Prüfmerkmal-Ermittlungseinrichtung darauf beschränkt ist, geräteunabhängige Messdaten auszuwerten. Vielmehr ist eine Prüfmerkmal-Ermittlung durch die Prüfmerkmal-Ermittlungseinrichtung auch anhand von geräteabhängigen Messdaten möglich und/oder kann die Prüfmerkmal-Ermittlungseinrichtung zumindest eine weitere Einrichtung aufweisen, wie zum Beispiel eine Einrichtung zur Verarbeitung der Rohdaten der Vermessung von Werkstücken wie die Daten-Verarbeitungseinrichtung. Wenn der Nutzungsumfang nicht anhand von tatsächlichen Messergebnissen ermittelt wird, kann die Prüfmerkmal-Ermittlungseinrichtung alternativ oder zusätzlich zu den zuvor erwähnten Möglichkeiten den Nutzungsumfang zum Beispiel durch Auswertung eines Prüfplans und optional weitergehender Informationen wie Anzahl der zu vermessenden Werkstücke und/oder Toleranz des Prüfmerkmals ermitteln. Bezogen auf das Ausführungsbeispiel der Fig. 2 kann die Prüfmerkmal-Ermittlungseinrichtung daher die Prüfplan-Erzeugungseinrichtung 20 und/oder eine weitere Einrichtung aufweisen, die den Prüfplan 21 empfängt.

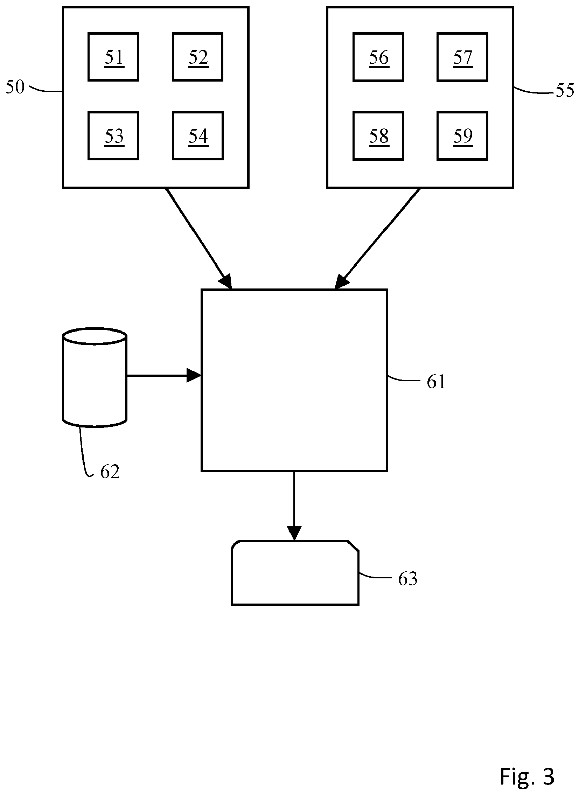

Fig. 3 zeigt ein Blockdiagramm mit Blöcken 50, 55, 61, 62 und 63. Der Block 50 repräsentiert Prüfplan- und Toleranz-Daten. Der Block 55 repräsentiert Prozessdaten. Die Daten, die durch die Blöcke 50 und 55 repräsentiert werden, stehen einer Nutzungsumfang-Ermittlungseinrichtung 61 zur Verfügung. Auf Basis dieser Daten und weiterer Informationen, insbesondere aus Nutzungswert-Daten 62 ermittelt die Nutzungsumfang-Ermittlungseinrichtung 61 den Nutzungsumfang 63 der Nutzung zumindest eines Koordinatenmessgeräts.

Die Prüfplan- und Toleranz-Daten 50 weisen Informationen auf über einen Prüfplan zur Prüfung von Werkstücken, insbesondere von Werkstücken gleichen Typs. Hinzu kommt in dem hier beschriebenen Ausführungsbeispiel zu den eigentlichen Prüfplan-Daten die Vorgabe der Toleranz, bei der die Prüfmerkmale gemäß dem Prüfplan ermittelt werden sollen. Bei geringerer Toleranz ist der Nutzungswert größer als bei höherer Toleranz. Die Information über den Nutzungswert bei einer vorgegebenen Toleranz erhält die Nutzungsumfang-Ermittlungseinrichtung 61 aus den Nutzungswert-Daten 62. Bei der Berücksichtigung der Toleranz handelt es sich jedoch wie auch bei den im Folgenden genannten Einflussgrößen für die Ermittlung des Nutzungsumfangs um eine optionale Vorgehensweise. Der Nutzungsumfang wird gemäß der Erfindung immer auf Basis der zu ermittelnden und/oder ermittelten Prüfmerkmale ermittelt, jedoch nur in konkreten Ausführungsformen unter Berücksichtigung der erlaubten Toleranz.

In dem anhand von Fig. 3 beschriebenen Ausführungsbeispiel weisen die Prüfplan- und Toleranz-Daten 50 außer den Prüfmerkmalen 51 und der Toleranz 53 auch die Art und/oder Anzahl der Prüfmerkmale 52 pro Werkstück und optional auch die Werkstückgröße 54 auf. Es können je nach Ausführungsbeispiel beliebige Kombinationen der genannten Informationen bei der Ermittlung des Nutzungsumfangs berücksichtigt werden.

Die optionale Berücksichtigung der Information über die Werkstückgröße 54 ermöglicht es insbesondere den für die Vermessung großer und sehr großer Werkstücke erhöhten Aufwand mit einzubeziehen. Z.B. können Werkstücke hinsichtlich ihrer Größe in verschiedene Kategorien eingeteilt werden, etwa Kategorie "kleine Werkstücke und mittelgroße Werkstücke" und die Kategorie "große Werkstücke". Jeder dieser Kategorien kann ein Nutzungswert-Faktor (Multiplikator) zugeordnet sein, der bei der Berechnung des Nutzungsumfangs verwendet wird. In anderen Fällen kann der Aufwand für die Vermessung kleiner Werkstücke erhöht sein und dies kann bei der Ermittlung des Nutzungsumfangs berücksichtigt werden, z. B. bei schlechter Zugänglichkeit der Messelemente des Werkstücks.

Außerdem werden wie bereits erwähnt Prozessdaten 55 bei der Ermittlung des Nutzungsumfangs berücksichtigt. In dem in Fig. 3 dargestellten Ausführungsbeispiel gehören zu den Prozessdaten die Anzahl der zu prüfenden und/oder geprüften Werkstücke 56, die Art und/oder der Typ des verwendeten Koordinatenmessgeräts 57, die Messgeschwindigkeit 58 und Informationen über anzuwendende Maßnahmen der Messgenauigkeit-Steigerung 59.

Wenn in dieser Beschreibung die Berücksichtigung des Typs des verwendeten oder zu verwendenden Koordinatenmessgeräts bei der Ermittlung des Nutzungsumfangs erwähnt wird, kann jeweils alternativ oder zusätzlich auch der Typ des verwendeten oder zu verwendenden Messsensors des Koordinatenmessgeräts berücksichtigt werden.

Die Anzahl der Werkstücke 56 kann insbesondere die Anzahl typgleicher Werkstücke sein, die gemäß demselben Prüfplan geprüft werden. Z.B. kann die Anzahl der Werkstücke 56 ein Proportionalitätsfaktor bei der Berechnung des Nutzungsumfangs sein. In der Praxis kann die Anzahl z.B. 1.000 oder 2.500 betragen. Es ist jedoch auch möglich, dass bei größeren Anzahl-Werten der anzahlspezifische Nutzungsumfang, d.h. der Nutzungsumfang pro Werkstück, geringer ist als bei geringeren Werten der Anzahl. Dies trägt dem Umstand Rechnung, dass die Nutzung der Koordinatenmesstechnik bei einer größeren Anzahl von Werkstücken effektiver sein kann, z.B. durch Verwendung von Einrichtungen zur automatischen Zuführung der zu prüfenden Werkstücke zu dem Koordinatenmessgerät oder den Koordinatenmessgeräten.

Ferner kann die Art des Koordinatenmessgeräts bei der Ermittlung des Nutzungsumfangs berücksichtigt werden. Z.B. können Koordinatenmessgeräte mit taktil messenden Sensoren als eine Art von Koordinatenmessgeräten bezeichnet werden. Koordinatenmessgeräte mit optischen Sensoren gehören in diesem Fall einer anderen Art an. Es gibt jedoch auch andere Möglichkeiten, Koordinatenmessgeräte hinsichtlich ihrer Art zu unterscheiden, z.B. bezüglich der Art, wie ein Messsensor zur Vermessung der Werkstücke bewegt wird, etwa mittels eines Gelenkarms oder durch ein Portal-Messgerät. Beispielsweise kann jeder Art von Koordinatenmessgeräten ein Nutzungswert zugeordnet sein, der zum Beispiel als Faktor (d.h. Multiplikator) in die Berechnung des Nutzungsumfangs eingeht.

Alternativ oder zusätzlich zur Berücksichtigung der Art des Koordinatenmessgeräts kann der konkrete Typ des Koordinatenmessgeräts berücksichtigt werden. Z.B. kann daher für jeden Typ von Koordinatenmessgeräten, der verwendet werden kann (z.B., weil er dem Anwender in dessen Unternehmen zur Verfügung steht) ein Nutzungswert zugeordnet sein. Auch dieser Nutzungswert kann z.B. als Faktor (d.h. Multiplikator) in die Berechnung des Nutzungsumfangs eingehen. Entsprechendes gilt für den Typ des verwendeten oder zu verwendenden Messsensors des Koordinatenmessgeräts.

Die Messgeschwindigkeit für die Vermessung eines Werkstücks oder für den Anteil, der auf die für die Ermittlung eines bestimmten Prüfmerkmals erforderlichen Koordinaten entfällt, kann z.B. als Zeitdauer oder als Geschwindigkeitswert angegeben werden. Z.B. kann die Taktzeit beim Betrieb eines Koordinatenmessgeräts mit einem optischen Sensor für die Vermessung eines Werkstücks oder eines Bereichs eines Werkstücks bekannt sein. In jedem Takt wird ein Werkstück oder ein Bereich eines Werkstücks vermessen. Im nächsten Takt folgt die Vermessung eines anderen Werkstücks oder eines anderen Bereiches eines Werkstücks. Jeder erreichbaren Geschwindigkeit oder einer Mehrzahl von Geschwindigkeitsbereichen kann jeweils ein Nutzungswert zugeordnet sein. Auch dieser Nutzungswert kann insbesondere ein Faktor (Multiplikator) bei der Berechnung des Nutzungsumfangs sein. Manche Koordinatenmessgeräte bieten die Möglichkeit, Werkstücke mit verschiedener Geschwindigkeit zu vermessen. Beispielsweise ermöglicht es eine Steuerungssoftware des Koordinatenmessgeräts die Geschwindigkeit einzustellen, zum Beispiel auf einen höheren und eine niedrigeren Geschwindigkeitswert. Der Modus der Vermessung mit höherer Geschwindigkeit kann zu einer geringeren Messgenauigkeit und somit unter Umständen dazu führen, dass die Einhaltung einer geringen erlaubten Toleranz eines zu ermittelnden oder ermittelten Prüfmerkmals nicht festzustellen ist. Die Einflussgrößen bei der Ermittlung des Nutzungsumfangs können daher teilweise voneinander abhängen.

Ferner bieten manche Koordinatenmessgeräte oder Auswertungseinrichtungen, die der Auswertung der unmittelbaren oder konsolidierten Messergebnisse der Vermessung mittels eines Koordinatenmessgeräts dienen, die Möglichkeit, die Messgenauigkeit zu steigern. Beispielsweise kann die Anzahl der Messpunkte auf der Oberfläche des Werkstücks erhöht werden bzw. eine größere Anzahl der Messpunkte auszuwerten. Andere Maßnahmen bieten Korrekturen der Messwerte, insbesondere anhand von Daten aus der Kalibrierung und/oder Einmessung eines Koordinatenmessgeräts oder durch Berücksichtigung von Umgebungseinflüssen wie z.B. der Temperatur. Die Nutzung derartiger Verfahren zur Messgenauigkeit-Steigerung kann jeweils durch einen entsprechenden Nutzungswert, z.B. durch einen Faktor (Multiplikator), bei der Ermittlung des Nutzungsumfangs berücksichtigt werden. Da es sich um eine Genauigkeitssteigerung handelt, kann der Nutzungswert jeweils ein Faktor größer als 1 sein, sodass bei der Berechnung des Nutzungsumfangs ein höherer Wert ermittelt wird.

Alternativ oder zusätzlich zu den oben anhand von Fig. 3 beschriebenen Einflussgrößen können andere Einflussgrößen berücksichtigt werden, z.B. die Art und/oder der Typ des Koordinatenmessgeräts unabhängig von dem verwendeten Messsensor, die Art und/oder der Typ des verwendeten Messsensors als separate Einflussgröße.

In den Nutzungswert-Daten 62 gemäß Fig. 3 sind alle Informationen über Nutzungswerte zu den Einflussgrößen bei der Ermittlung des Nutzungsumfangs enthalten. Abhängig von dem Wert und/oder der Kategorie der Einflussgrößen, die sich aus den Prüfplan- und Toleranz-Daten 50 und aus den Prozessdaten 55 ergeben, ermittelt die Nutzungsumfang-Ermittlungseinrichtung 61 den Nutzungsumfang 63 und gibt diesen aus. Nicht nur in Bezug auf das anhand von Fig. 3 beschriebene Ausführungsbeispiel kann der Nutzungsumfang als Wert auf einer Nutzungsskala angegeben werden. Wenn die Skala keine zusätzliche Einheit aufweist, wird der Nutzungsumfangs-Wert als Zahl ausgegeben, z.B. mit einer vorgegebenen Anzahl von Nachkommastellen. Z.B. kann daher der Nutzungsumfang-Wert 1.386 oder in einem anderen Fall 8.100,5 ermittelt und ausgegeben werden. Um dem Empfänger der Information über den Nutzungsumfang einen Bezug zu einer Bewertungseinheit zu erleichtern, kann die Skala auf eine Einheit wie z.B. "Dollar" oder "Euro" oder "Nutzungseinheit" bezogen sein. Der zuvor erwähnte Wert kann daher als 8.100,5 Nutzungseinheiten angegeben werden. Wenn der Bezug zu einer Währung wie zuvor erwähnt z. B. Dollar oder Euro hergestellt ist, kann dies dem Nutzer den Bezug zu einem betriebswirtschaftlichen Wert vermitteln. Auch lässt sich in diesem Fall der Nutzungsumfang-Wert als Preis für die Nutzung auffassen. Ein solcher Preis, auch wenn er ausschließlich auf technischen Informationen der geplanten oder tatsächlichen Nutzung von Koordinatenmesstechnik beruht, kann z.B. innerhalb einer Unternehmensgruppe die Grundlage für eine Bewertung der gruppeninternen Dienstleistungen sein. Ein entsprechender Preis kann aber auch zwischen dem Nutzer und dem Hersteller des zumindest einen Koordinatenmessgeräts bzw. zwischen dem Nutzer und einem Anbieter des zumindest einen Koordinatenmessgeräts als Vergütung für die Nutzung vereinbart werden.

In einem gegenüber Fig. 3 vereinfachten Ausführungsbeispiel kann der Nutzungsumfang N beispielsweise wie in der folgenden Gleichung (1) angegeben berechnet werden:

$$N = (D * nd + R * nr) * Tf * G * V * P * nw \qquad (1)$$

Dabei bedeuten die auf der rechten Seite der Gleichung (1) verwendeten Großbuchstaben jeweils einen Nutzungswert, nämlich D für einen ersten Typ Prüfmerkmal, R für einen zweiten Typ Prüfmerkmal, Tf für einen Faktor, der eine geringe erlaubte Toleranz berücksichtigt, G für den Gerätetyp des Koordinatenmessgeräts, V für die Geschwindigkeit der Vermessung und P für die Messgenauigkeit. Alternativ oder zusätzlich kann ein Faktor verwendet werden, der den Nutzungswert eines verwendeten oder zu verwendenden Messsensors des Koordinatenmessgeräts repräsentiert. Ferner alternativ oder zusätzlich kann der Nutzungswert von anderen Eigenschaften, insbesondere zumindest einem Einstellungsparameter, des zu verwendenden Koordinatenmessgeräts abhängen, beispielsweise von Softwareeinstellungen der Steuerungssoftware des Koordinatenmessgeräts. Für jede Eigenschaft kann ebenfalls ein die Eigenschaft repräsentierender Faktor in die Gleichung eingeführt werden, der von der Einstellung abhängt. Das Zeichen * ist das Multiplikationszeichen. Die weiteren Symbole bezeichnen: nd die Anzahl der pro Werkstück zu ermittelnden Prüfmerkmale des ersten Typs, nr die Anzahl der pro Werkstück zu ermittelnden Prüfmerkmale des zweiten Typs und nw die Anzahl der zu vermessenden Werkstücke. Gleichung (1) enthält daher eine Summe, die den Nutzungswert für die Ermittlung der Prüfmerkmale pro Werkstück wiedergibt, wobei die Summe mit mehreren Nutzungswert-Faktoren für die Berücksichtigung weiterer Einflussgrößen multipliziert wird. Werden bei anderen Ausführungsbeispielen andere Einflussgrößen berücksichtigt, dann kann zum Beispiel Gleichung (1) so abgeändert werden, dass die Summe, die den Nutzungswert für die Ermittlung der Prüfmerkmale pro Werkstück wiedergibt, mit den Nutzungswert-Faktoren für die anderen Einflussgrößen multipliziert wird. Zum Beispiel aber wenn wie oben erwähnt bei großen Stückzahlen von zu vermessenden Werkstücken der Nutzungswert pro Werkstück geringer werden soll, kann eine entsprechend andere mathematische Operation als die Multiplikation mit der Anzahl nw der zu vermessenden Werkstücke gewählt werden. Zum Beispiel kann die Anzahl nw in Gleichung (1) durch eine mathematische Funktion ersetzt werden, die die Abhängigkeit des Nutzungswert-Faktors, welcher die Anzahl der zu vermessenden Werkstücke berücksichtigt, von der Anzahl nw der zu vermessenden Werkstücke beschreibt.

Die Berechnungsweise bei der Ermittlung des Nutzungsumfangs entsprechend Gleichung (1) ist nicht auf zwei Typen von Prüfmerkmalen beschränkt. Vielmehr kann jede andere Anzahl von Typen von Prüfmerkmalen bei der Prüfung der Werkstücke vorkommen. Dementsprechend ist die Summe in Gleichung (1) um entsprechende Summanden zu ergänzen oder zu reduzieren. Jeder Summand entspricht einem Typ von Prüfmerkmalen und der Anzahl der Prüfmerkmale dieses Typs pro Werkstück.

Zuvor erwähnt wurde bereits die Möglichkeit, Parameter eines Koordinatenmessgeräts einzustellen. Zusätzlich zu den klassischen Parametern eines Koordinatenmessgeräts, wie zum Beispiel Scanninggeschwindigkeit, können bei entsprechend ausgeführten Koordinatenmessgeräten Softwarefunktionen der Steuerung des Koordinatenmessgeräts ausgewählt werden. Beispielsweise kann durch eine bestimmte Softwarefunktion die Genauigkeit der Vermessung eines Werkstücks erhöht werden. Insbesondere kann daher nicht nur in Bezug auf klassische Parameter eines Koordinatenmessgeräts bei der Ermittlung des Nutzungsumfangs berücksichtigt werden, welche Parameter und/oder Parameterwerte für die Vermessung des Werkstücks oder der Werkstücke gültig sind. Zum Beispiel ist der Nutzungswert bei Auswahl einer bestimmten Softwarefunktion der Steuerung höher als wenn die Softwarefunktion nicht ausgewählt ist.

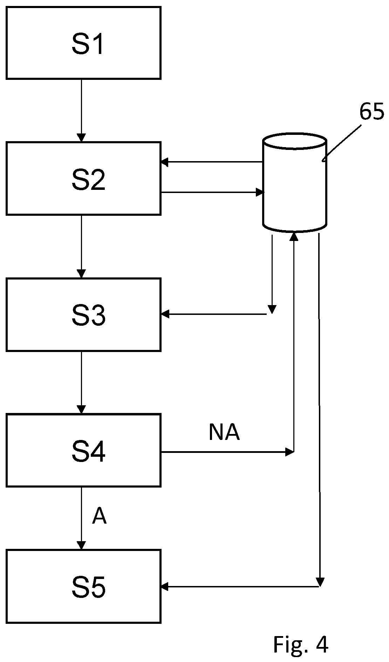

Das in Fig. 4 dargestellte Flussdiagramm geht mit Schritt S1 von der Erzeugung eines CAD-Modells des Werkstücks mit PMI-Daten oder einer technischen Zeichnung eines Werkstücks aus. Unter PMI-Daten sind Daten von Produkt-Herstellungsinformationen zu verstehen. In dem auf Schritt S1 folgenden Schritt S2 werden für eine Prüfung eines einzelnen Werkstücks, das gemäß den PMI-Daten oder der Zeichnung gefertigt worden ist oder in Zukunft gefertigt wird, die Prüfmerkmale anhand der PMI-Daten oder anhand der technischen Zeichnung festgelegt. Ferner werden in dem Schritt S2 die Toleranzen der zu ermittelnden Prüfmerkmale festgelegt, d.h. die Toleranz oder auch Schwankungsbreite, innerhalb der der Wert des Prüfmerkmals von dem vorgegebenen, Sollwert des Prüfmerkmals abweichen darf, um die Vorgaben zu erfüllen. Die Toleranz des Prüfmerkmals stellt daher Anforderungen an die Genauigkeit der Ermittlung des Prüfmerkmals. Optional können in dem Schritt S2 auch Vorgaben 65 für die Ermittlung des Nutzungsumfangs gemacht werden, wie in Fig. 4 durch einen Pfeil zu einem zylindrischen Block mit dem Bezugszeichen 65 symbolisiert ist.

In dem auf Schritt S2 folgenden Schritt S3 wird der Nutzungsumfang der Nutzung zumindest eines Koordinatenmessgeräts für die Ermittlung der Prüfmerkmale für eine gegebene Anzahl zu vermessender Werkstücke ermittelt. In dem auf Schritt S3 folgenden Schritt S4 wird anhand des ermittelten Nutzungsumfangs, der bei entsprechender Durchführung der Prüfung der Werkstücke entstehen würde, geprüft, ob der Nutzungsumfang akzeptabel ist und die Prüfung daher in der Weise durchgeführt werden soll, die der Ermittlung des Nutzungsumfangs in Schritt S3 zugrunde lag. Wird entschieden, dass der Nutzungsumfang akzeptabel ist, folgt auf den Schritt S4 Schritt S5. Dementsprechend ist der von dem Schritt S4 zu dem Schritt S5 weisende Pfeil in Fig. 4 mit "A" bezeichnet. Wenn dagegen entschieden wird, dass der Nutzungsumfang nicht akzeptabel ist, werden die Vorgaben für die Ermittlung des Nutzungsumfangs in Schritt S3 angepasst. Ausführungsbeispiele für die Vorgaben wurden bereits anhand von Fig. 3 beschrieben. Die Vorgaben 65 werden bei den Schritten S2, S3 und S5 benötigt, wie durch Pfeile angedeutet ist.

Nun werden Schritt S2 mit den veränderten Vorgaben 65 und auf Basis der Vorgaben Schritt S3 sowie auf Basis des in Schritt S3 ermittelten Nutzungsumfangs auch Schritt S4 erneut ausgeführt. Ist der ermittelte Nutzungsumfang nun akzeptabel, wird nach der erneuten Ausführung von Schritt S4 die Prüfung der Werkstücke in Schritt S5 durchgeführt. Andernfalls können die Vorgaben 65 erneut verändert werden und können die Schritte S2 bis S4 erneut ausgeführt werden.

Das in Fig. 4 dargestellte Ausführungsbeispiel verdeutlicht, dass es z.B. einem Prüfingenieur möglich ist, anhand des vorab ermittelten Nutzungsumfangs zu entscheiden, ob die zur Verfügung stehende Koordinatenmesstechnik in angemessener Weise genutzt wird. Anhand der Prüfmerkmale und optional weiterer Einflussgrößen kann daher vorab eine auf technischen Merkmalen beruhende Bewertung vorgenommen werden. Durch die Veränderung der Vorgaben für die Ermittlung des Nutzungsumfangs kann ferner ein anderes Szenario für die Prüfung der Werkstücke erzeugt und der entsprechende Nutzungsumfang ermittelt werden. Insbesondere kann daher vor Durchführung der Prüfung der Werkstücke für verschiedene Szenarien anhand des Nutzungsumfangs bzw. jeweils des Wertes des Nutzungsumfangs für die einzelnen Szenarien entschieden werden, gemäß welchem Szenario die Prüfung durchgeführt werden soll.

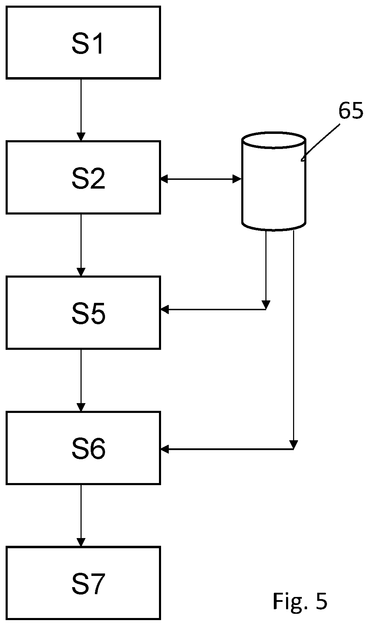

In dem Flussdiagramm der Fig. 5 sind Schritte eines Verfahrens zum Prüfen von Werkstücken dargestellt, bei dem der Nutzungsumfang nach der Prüfung der Werkstücke ermittelt wird. Schritte, die in Fig. 5 in gleicher Weise wie in Fig. 4 bezeichnet sind, werden wie anhand von Fig. 4 beschrieben ausgeführt. Dies gilt insbesondere für die ersten beiden Schritte S1 und S2. Wie auch bei dem anhand von Fig. 4 beschriebenen Verfahren werden bei dem in Fig. 5 dargestellten Schritt S2 Vorgaben 65 für die Prüfung der Werkstücke gemacht und/oder verwendet. Diese Vorgaben 65 werden jedoch später auch in Schritt S6 bei der Ermittlung des Nutzungsumfangs verwendet. Zunächst folgt auf Schritt S2 jedoch Schritt S5, die Prüfung der Werkstücke gemäß den Vorgaben 65. In dieser Hinsicht wird Schritt S5 in dem Verfahren gemäß Fig. 5 ebenso wie Schritt S5 in dem Verfahren gemäß Fig. 4 ausgeführt. In dem folgenden Schritt S6 wird in dem Verfahren gemäß Fig. 5 der Nutzungsumfang ermittelt, und zwar wie bereits erwähnt auf Basis der Vorgaben 65 und ferner auch auf Basis der Vermessung der Werkstücke in Schritt S5. Die Ergebnisse der Vermessung und der Ermittlung des Nutzungsumfangs können in dem auf Schritt S6 folgenden Schritt S7 ausgewertet werden.

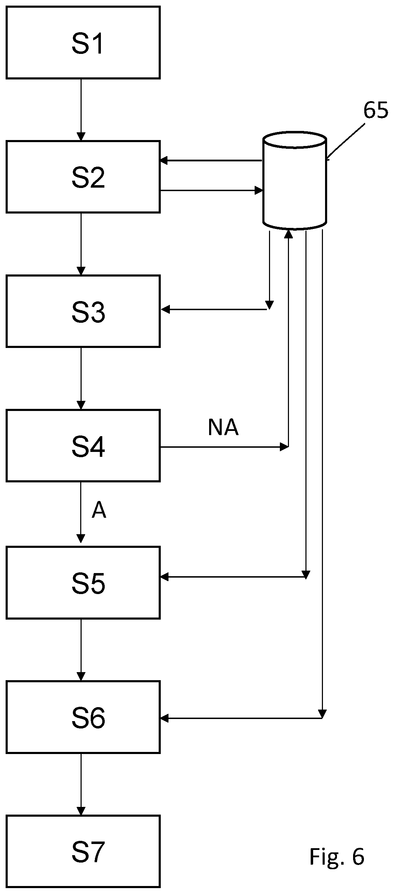

Das anhand von Fig. 5 beschriebene Verfahren ermöglicht eine Bewertung des Nutzungsumfangs bei der Prüfung von Werkstücken im Nachhinein auf Basis der tatsächlichen Vermessung der Werkstücke. Die Bewertung des Nutzungsumfangs erfolgt dabei auf Grundlage technischer Informationen, nämlich der Prüfmerkmale und weiterer Informationen. Die Prüfmerkmale können bei dem in Fig. 5 dargestellten Verfahren in Schritt S5 im Rahmen der Prüfung der Werkstücke oder in dem nachfolgenden Schritt S6 ermittelt werden. Die Festlegung, welche Prüfmerkmale ermittelt werden, ist aber Teil der Vorgaben 65. Insbesondere in Schritt S6 kann daher bei dem in Fig. 5 dargestellten Verfahren zumindest eine Überprüfung stattfinden, ob die Prüfmerkmale gemäß den Vorgaben ermittelt wurden. Eine einfachere Überprüfung, ob die Vorgaben eingehalten wurden, kann bei dem im Folgenden anhand von Fig. 6 beschriebenen Verfahren durchgeführt werden, wie noch beschrieben wird.

Das in Fig. 6 dargestellte Verfahren enthält alle Schritte der in Fig. 4 und Fig. 5 dargestellten Verfahren. Demgemäß wird in Schritt S3 vor der Durchführung der Prüfung der Werkstücke der Nutzungsumfang ermittelt und kann ebenfalls vor der Durchführung der Prüfung wie bereits anhand von Fig. 4 beschrieben eine Anpassung der Vorgaben 65 erfolgen. Wenn in Schritt S4 entschieden wird, dass der Nutzungsumfang akzeptabel ist, folgt die Prüfung der Werkstücke auf Basis der Vorgaben 65. Im nachfolgenden Schritt S6 werden die Prüfmerkmale erneut dazu genutzt, den Nutzungsumfang zu ermitteln. Dabei werden entweder die tatsächlich ermittelten Prüfmerkmale verwendet oder es wird überprüft, dass die ermittelten Prüfmerkmale den vorher festgelegten Prüfmerkmalen entsprechen. Bevorzugt wird, dass in Schritt S6 der Nutzungsumfang auf Basis der tatsächlich ermittelten Prüfmerkmale aufgrund der Prüfung in Schritt S5 ermittelt wird.

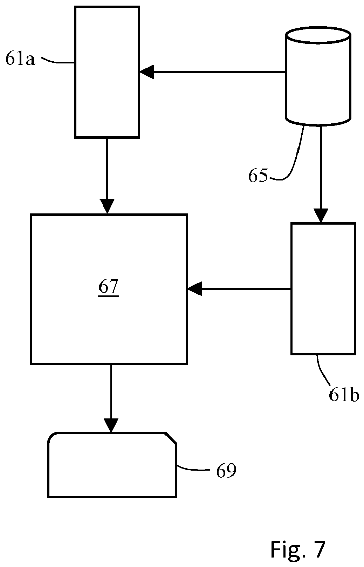

Anhand von Fig. 7 wird ein Ausführungsbeispiel beschrieben, wie auf einfache Weise überprüft werden kann, ob die Prüfung der Werkstücke wie vorher festgelegt erfolgt ist. Hierzu weist die in Fig. 7 dargestellte Anordnung eine erste Nutzungsumfang-Ermittlungseinrichtung 61a und eine zweite Nutzungsumfang-Ermittlungseinrichtung 61b auf, bei denen es sich auch um dieselbe Einrichtung, z.B. einen Computer, handeln kann. Die erste Nutzungsumfang-Ermittlungseinrichtung 61a ermittelt den Nutzungsumfang vor der Prüfung der Werkstücke, z.B. wie anhand von Fig. 6 beschrieben. Die zweite Nutzungsumfang-Ermittlungseinrichtung 61b ermittelt den Nutzungsumfang auf Basis der tatsächlich ermittelten Prüfmerkmale, wie z.B. anhand von Fig. 6 beschrieben. In beiden Fällen werden die Vorgaben 65 berücksichtigt, wenn und soweit dies erforderlich ist.

Eine Überprüfungseinrichtung 67 der Anordnung überprüft, ob die ermittelten Nutzungsumfänge, d.h. die Werte des Nutzungsumfangs, übereinstimmen. Wenn dies der Fall ist, wird als Prüfergebnis 69 ein entsprechendes Signal ausgegeben. In diesem Fall kann davon ausgegangen werden, dass die Prüfung der Werkstücke entsprechend den Vorgaben und Festlegungen durchgeführt worden ist.

Andernfalls, wenn die Werte des Nutzungsumfangs nicht übereinstimmen, findet vorzugsweise eine Analyse der Fehlerursache statt. Insbesondere kann die Überprüfungseinrichtung 67 hierzu die Anzahl und Art der ermittelten Prüfmerkmale und/oder andere Einflussgrößen (wie die Art und/oder den Typ des verwendeten Koordinatenmessgeräts und/oder des verwendeten Messsensors) bei der Ermittlung des Nutzungsumfangs daraufhin überprüfen, ob sie den Vorgaben und Festlegungen entsprechen. Z.B. kann eine geringere oder größere Anzahl von Werkstücken vermessen worden sein. In diesem Fall kann z.B. die Vermessung weiterer Werkstücke angefordert werden, um die erwartete statistische Basis für Aussagen über die Fertigungsgenauigkeit zu erhalten. In einem anderen möglichen Fall kann die Verwendung eines anderen als des vorher festgelegten Koordinatenmessgeräts zu der Abweichung der ermittelten Werte des Nutzungsumfangs geführt haben. In diesem Fall ist darauf zu achten, dass die Messergebnisse auf Basis der Eigenschaften des tatsächlich verwendeten Koordinatenmessgeräts angegeben und aufbereitet werden.

Die Informationen zur Überprüfung der Ursachen einer Abweichung der ermittelten Werte des Nutzungsumfangs werden von der Überprüfungseinrichtung 67 vorzugsweise über die Nutzungsumfangumfang-Ermittlungseinrichtungen 61a, 61b jeweils für den von der Nutzungsumfang-Ermittlungseinrichtung 61a bzw. 61b ermittelten Nutzungsumfang erhalten. Daher ist es von Vorteil, wenn die zweite Nutzungsumfang-Ermittlungseinrichtung 61b alle Einflussgrößen direkt aus der Prüfung der Werkstücke, wie sie tatsächlich stattgefunden hat, erhält. Die Koordinaten, welche aus der Vermessung der Werkstücke erhalten werden, sind daher vorzugsweise ergänzt um Daten, die alle Informationen über die Einflussgrößen für die Ermittlung des Nutzungsumfangs aufweisen.

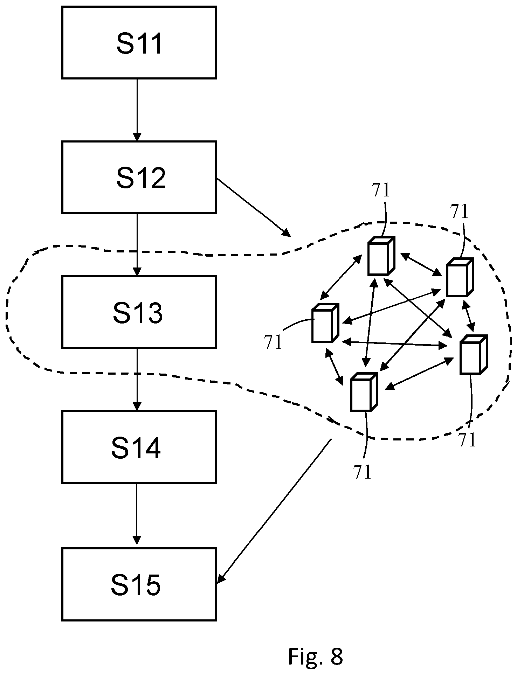

Im Folgenden wird anhand von Fig. 8 ein Verfahren beschrieben, wie erzeugte Daten in Zusammenhang mit der Prüfung von Werkstücken sicher gegen Veränderung abgespeichert werden. In einem ersten Schritt S11 werden Daten, die Informationen über eine geplante Prüfung von Werkstücken enthalten, in eine Mehrzahl von Datenblöcken unterteilt, die gemäß dem Verkettungsprinzip der Blockchain-Technologie miteinander verkettet werden. Die Informationen weisen vorzugsweise vollständige Informationen über die zuvor erwähnten Festlegungen und Vorgaben für die Prüfung von Werkstücken auf. Hierzu gehören insbesondere auch Prüfplan-Daten sowie die für die Ermittlung des Nutzungsumfangs zumindest eines Koordinatenmessgeräts zur Durchführung der Prüfung erforderlichen Nutzungsumfang-Daten. Zum Beispiel enthält jeder Block die Information über eine einzige Einflussgröße oder über eine Mehrzahl von Einflussgrößen, die bei der Ermittlung des Nutzungsumfangs erforderlich sind. Insbesondere wenn mehrere Arten von Prüfmerkmalen zu ermitteln sind, kann die Information über jede der Arten von Prüfmerkmalen in einem separaten Block gespeichert sein.

In dem auf den Schritt S11 folgenden Schritt S12 wird die erzeugte Kette von Blöcken zu einem anderen Knoten (insbesondere einem Server) eines Computernetzwerks übertragen. Z.B. am Ort der Erzeugung der Kette von Blöcken oder zumindest an einem weiteren Ort, zu dem die Kette von Blöcken übertragen wird, befindet sich mindestens ein weiterer Knoten. Unter dem Begriff Knoten sind Bestandteile eines Computer-Netzwerks zu verstehen, das im Rahmen eines Blockchain-Systems miteinander zusammenwirkt. Die Knoten überprüfen fortlaufend und/oder in vorgegebener Weise gegenseitig, ob Unterschiede zwischen den auf den verschiedenen Knoten gespeicherten Versionen der Kette von Blöcken bestehen. Diese Überprüfungstätigkeit wird in Fig. 8 durch den auf Schritt S12 folgenden Schritt S13 und das rechts daneben schematisch dargestellte Netzwerk von Knoten 71 symbolisiert. Dabei symbolisieren in dem Ausführungsbeispiel die fünf dargestellten Quader jeweils einen Knoten 71. Durch die Mehrzahl von Linien mit Pfeilspitzen an den entgegengesetzten Enden wird die gegenseitige Überprüfungstätigkeit angedeutet.

In einem auf Schritt S13 folgenden Schritt S14 werden die zu vermessenden Werkstücke unter Verwendung zumindest eines Koordinatenmessgeräts vermessen und es werden die Prüfmerkmale gemäß dem Prüfplan ermittelt. Im folgenden Schritt S15 wird unter Nutzung der als Kette von Blöcken in den Knoten gespeicherten Daten und Informationen der Nutzungsumfang des zumindest einen bei der Prüfung der Werkstücke in Schritt S14 verwendeten Koordinatenmessgeräts ermittelt.

Der Vorteil der Ermittlung des Nutzungsumfangs nach der Prüfung der Werkstücke besteht darin, dass lediglich die der Kette von Blöcken bzw. den darin enthaltenen Daten entsprechende Prüfung der Werkstücke ermittelt werden muss bzw. umgekehrt und aufgrund der bestehenden Sicherheit gegen Veränderung der Daten mit hoher Zuverlässigkeit davon ausgegangen werden kann, dass die Daten nicht verändert wurden. Es kann dann auf Basis der tatsächlichen Nutzung des zumindest einen Koordinatenmessgeräts und der in der Kette von Blöcken gespeicherten Informationen der Nutzungsumfang ermittelt werden, beispielsweise wie anhand von Fig. 6 beschrieben. Ferner kann z.B. wie anhand von Fig. 7 beschrieben überprüft werden, ob die ermittelten Werte des Nutzungsumfangs übereinstimmen.

Die anhand von Fig. 8 erläuterte Blockchain-Technologie kann alternativ oder zusätzlich auf die Messergebnisse bei der Vermessung der zu prüfenden Werkstücke und/oder auf die ermittelten Prüfmerkmale angewandt werden. Insbesondere die Anwendung auf die ermittelten Prüfmerkmale ermöglicht eine sichere Dokumentation der Nutzung der ermittelten Prüfmerkmale. Insbesondere kann jedes Mal dann, wenn die ermittelten Prüfmerkmale ausgelesen oder weiterverarbeitet werden, wie z.B. bei der Berechnung statistischer Größen für die Prüfmerkmale typgleicher Werkstücke, die Kette von Datenblöcken verlängert werden, und zwar um jeweils zumindest einen Block, der die Nutzung oder Verarbeitung protokolliert. Dies erlaubt nachfolgend oder später eine Bewertung und/oder Überprüfung der Nutzung der Prüfmerkmal-Daten.

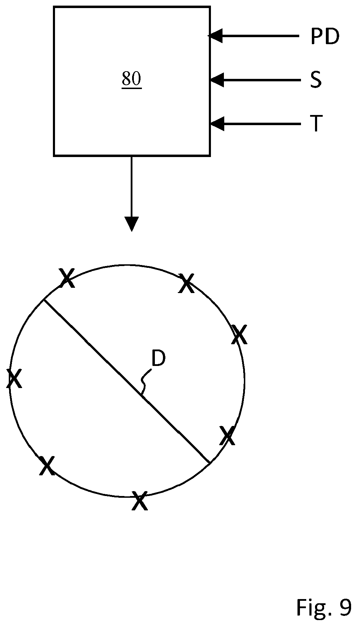

Anhand von Fig. 9 wird nun ein Beispiel für die Erzeugung einer Messvorschrift veranschaulicht. Eine Messvorschrift-Erzeugungseinrichtung 80 empfängt die Information über ein zu ermittelndes Prüfmerkmal MD, bei dem es sich um den Durchmesser D eines zylindrischen Bereichs eines Werkstücks handelt. Außerdem erhält die Messvorschrift-Erzeugungseinrichtung 80 die Information über den Sollwert S des Durchmessers D und die Toleranz T, um die das Prüfmerkmal MD von dem Sollwert S maximal abweichen darf.

Die Messvorschrift-Erzeugungseinrichtung 80 ermittelt nun die Anzahl und die Position der Messpunkte, deren Koordinaten zu messen sind, um das Prüfmerkmal zu ermitteln und feststellen zu können, ob die Toleranz T eingehalten ist. Unten in Fig. 9 ist schematisch eine Verteilung von sieben Messpunkten, jeweils durch ein "X" repräsentiert, dargestellt, die innerhalb einer senkrecht zur Längsachse des zylindrischen Bereichs verlaufenden Ebene auf der Oberfläche des zylindrischen Bereichs liegen. Ferner ist eine Kreislinie dargestellt, die eine Ausgleichskurve der sieben Messpunkte bildet. Wenn die Koordinaten der Messpunkte mittels eines Koordinatenmessgeräts gemessen worden sind, kann eine solche Kreislinie durch an sich bekannte Verfahren der Ausgleichsrechnung eingepasst werden und als Umfangslinie des zylindrischen Bereichs in der genannten Ebene angenommen werden. Der Durchmesser D des durch die Kreislinie definierten Kreises ist dann das Ergebnis der Ermittlung des Prüfmerkmals MD.

Die Messvorschrift-Erzeugungseinrichtung 80 gibt die Anzahl der zu vermessenden Messpunkte innerhalb der Ebene abhängig von dem Sollwert S und der vorgegebenen Toleranz T vor. Dabei kann insbesondere auch der Fehler der Messung der Koordinaten berücksichtigt werden. Zum Beispiel kann daher eine größere Anzahl von zu vermessenden Messpunkte vorgegeben werden, wenn der Fehler der Messung der Koordinaten größer ist. Allerdings kann es bei einem großen Fehler der Messung der Koordinaten auch mit einer sehr großen Anzahl von Messpunkten unmöglich sein, die Einhaltung einer kleinen Toleranz um den Sollwert sicher festzustellen.

Außer der Anzahl der zu vermessenden Messpunkte gibt die Messvorschrift-Erzeugungseinrichtung 80 auch die Position der Messpunkte vor, wobei es sich insbesondere um die Position bezogen auf Planungsdaten (zum Beispiel CAD Daten) des zu vermessenden Werkstücks handelt. Insbesondere kann die Messvorschrift-Erzeugungseinrichtung 80 im Fall des Prüfmerkmals MD sinnvollerweise vorgeben, dass die Messpunkte gleichmäßig über den Außenumfang des zylindrischen Bereichs verteilt sind und innerhalb derselben senkrecht zur Längsachse des zylindrischen Bereichs verlaufenden Ebene liegen. Daher kann die Messvorschrift-Erzeugungseinrichtung 80 insbesondere auch die Lage der Ebene und damit der Messpunkte bezüglich der Längsachse vorgeben und zum Beispiel auch vorgeben, dass eine gleich große Anzahl weiterer Messpunkte innerhalb einer weiteren solchen Ebene zu vermessen sind.

Bezugszeichenliste

1    Planungseinrichtung
3    Auswertungseinrichtung
10   Koordinatenmessgerät

17 Rechner
18 Steuerung
20 Prüfplan-Erzeugungseinrichtung
21 Prüfplan
22 erste Messplan-Erzeugungseinrichtung
23 allgemeiner Messplan
24 zweite Messplan-Erzeugungseinrichtung
25 konkreter Messplan
26 Messdaten (Rohdaten)
27 Daten-Empfangseinrichtung
29 Daten-Verarbeitungseinrichtung
30 Vermessungsanordnung
31 geräteunabhängige Messdaten
32 Prüfmerkmal-Ermittlungseinrichtung
33 Prüfmerkmaldaten
40 Aufbereitungseinrichtung
50 Prüfplan- und Toleranz-Daten
51 Prüfmerkmale
52 Art und/oder Anzahl der Prüfmerkmale
53 Toleranz
54 Werkstückgröße
55 Prozessdaten
56 Anzahl der Werkstücke
57 Art und/oder Typ des Koordinatenmessgeräts
58 Messgeschwindigkeit
59 Messgenauigkeit-Steigerung
61 Nutzungsumfang-Ermittlungseinrichtung
62 Nutzungswert-Daten
63 Nutzungsumfang
65 Vorgaben
67 Überprüfungseinrichtung
69 Prüfergebnis
71 Knoten
80 Messvorschrift-Erzeugungseinrichtung
D Durchmesser
PD Prüfmerkmal "Durchmesser eines zylindrischen Bereichs"
S Sollwert des Prüfmerkmals
T erlaubte Toleranz

**Patentansprüche**

1. Verfahren zum Prüfen von Werkstücken auf Basis einer Ermittlung von Koordinaten der Werkstücke unter Verwendung von zumindest einem Koordinatenmessgerät (10), wobei

- Prüfmerkmale (51), die aus den Koordinaten der Werkstücke ermittelbar sind, definiert werden oder Informationen über eine Definition der Prüfmerkmale (51) empfangen werden und
- anhand der Prüfmerkmale (51) ein Nutzungsumfang (63) einer Nutzung des zumindest einen Koordinatenmessgeräts (10) ermittelt wird

und wobei,

a) Koordinaten der Werkstücke unter Verwendung von zumindest einem Koordinatenmessgerät (10) ermittelt werden und die Prüfmerkmale (51) aus den ermittelten Koordinaten ermittelt werden, wobei bei der Ermittlung von jedem der Prüfmerkmale (51) die für mehrere Messpunkte und/oder zumindest einen Messbereich des Werkstücks ermittelten Koordinaten verwendet werden, und/oder
b) für zumindest eines der Prüfmerkmale (51) eine Messvorschrift erzeugt wird, die die von einem Koordinatenmessgerät (10) zu vermessenden Messpunkte der Werkstücke vorgibt.

2.  Verfahren nach Anspruch 1, wobei bei der Ermittlung des Nutzungsumfangs (63) eine Anzahl der ermittelten Prüfmerkmale (51) berücksichtigt wird.

3.  Verfahren nach Anspruch 1 oder 2, wobei verschiedene Arten von Prüfmerkmalen (51) vordefiniert sind, wobei für jede der Arten von Prüfmerkmalen (51) ein individueller Nutzungswert vorgegeben ist oder wird und wobei bei der Ermittlung des Nutzungsumfangs (63) der individuelle Nutzungswert der ermittelten Prüfmerkmale (51) berücksichtigt wird.

4.  Verfahren nach einem der Ansprüche 1-3, wobei zumindest eines der vordefinierten Prüfmerkmale (51) mit unterschiedlicher Toleranz ermittelbar ist und wobei bei der Ermittlung des Nutzungsumfangs (63) jeweils die Toleranz der ermittelten Prüfmerkmale (51) berücksichtigt wird.

5.  Verfahren nach einem der Ansprüche 1-4, wobei zumindest eines der vordefinierten Prüfmerkmale (51) mit unterschiedlicher Geschwindigkeit ermittelbar ist und wobei bei der Ermittlung des Nutzungsumfangs (63) jeweils die Geschwindigkeit der Ermittlung des Prüfmerkmals berücksichtigt wird.

6.  Verfahren nach einem der Ansprüche 1-5, wobei eine Speicherung von Daten über die ermittelten Prüfmerkmale (51) in einen Datenspeicher stattfindet und zumindest einmal ein Auslesen oder teilweises Auslesen der Daten aus dem Datenspeicher stattfindet und wobei bei der Ermittlung des Nutzungsumfangs (63) die Speicherung der Daten berücksichtigt wird und jeweils das Auslesen der Daten oder das teilweise Auslesen der Daten berücksichtigt wird.

7.  Verfahren nach einem der Ansprüche 1-6, wobei vor der Vermessung der Werkstücke ein Prüfplan erstellt wird, der eine Ermittlung zumindest eines der vordefinierten Prüfmerkmale (51) für jedes zu vermessende Werkstück vorsieht, und wobei anhand des Prüfplans der Nutzungsumfang der Nutzung des zumindest einen Koordinatenmessgeräts (10) ermittelt wird.

8.  Verfahren nach Anspruch 7, wobei Prüfplan-Daten erzeugt werden, die alle diejenigen Informationen enthalten, welche aus dem Prüfplan für die Ermittlung des Nutzungsumfangs (63) relevant sind, wobei die Prüfplan-Daten gespeichert werden und wobei bei der Speicherung und/oder zur Speicherung der Prüfplan-Daten ein zusätzlicher Schritt ausgeführt wird, der eine Sicherheit gegen eine Veränderung der Prüfplan-Daten erhöht.

9.  Verfahren nach Anspruch 8, wobei die Prüfplan-Daten zu vollständigen Nutzungsumfang-Daten ergänzt werden, die eine Ermittlung des Nutzungsumfangs (63) ermöglichen, und wobei die Nutzungsumfang-Daten gespeichert werden und wobei bei der Speicherung und/oder zur Speicherung der Nutzungsumfang-Daten ein zusätzlicher Schritt ausgeführt wird, der eine Sicherheit gegen eine Veränderung der Nutzungsumfang-Daten erhöht.

10. Verfahren nach einem der Ansprüche 1-9, wobei die Art und oder der Typ des zumindest einen Koordinatenmessgeräts (10) auf Basis von zuvor festgelegten Prüfmerkmalen festgelegt wird, die zu ermitteln sind.

11. Anordnung zum Ermitteln eines Nutzungsumfangs (63) bei der Prüfung von Werkstücken, wobei die Anordnung eine Nutzungsumfang-Ermittlungseinrichtung (61) aufweist, die ausgestaltet ist, insbesondere zur Ausführung des Verfahrens nach einem der Ansprüche 1-9, anhand von Prüfmerkmalen der Werkstücke einen Nutzungsumfang (63) einer Nutzung zumindest eines Koordinatenmessgeräts (10) zu ermitteln.

12. Anordnung nach Anspruch 11, die eine Anordnung zum Prüfen von Werkstücken ist, wobei die Nutzungsumfang-Ermittlungseinrichtung (61) eine Schnittstelle zum Empfangen von Messergebnissen einer Vermessung von Werkstücken unter Verwendung von zumindest einem Koordinatenmessgerät (10) aufweist, wobei die Messergebnisse ermittelte Koordinaten der Werkstücke aufweisen, und wobei die Nutzungsumfang-Ermittlungseinrichtung (61) ausgestaltet ist, anhand von Prüfmerkmalen der Werkstücke, bei deren Ermittlung jeweils die ermittelten Koordinaten von mehreren Messpunkten und/oder von zumindest einem Messbereich des Werkstücks verwendet werden oder wurden, einen Nutzungsumfang einer Nutzung des zumindest einen Koordinatenmessgeräts (10) zu ermitteln.

13. Anordnung nach Anspruch 11 oder 12, die eine Anordnung zur Simulation der Prüfung von Werkstücken ist, wobei die Nutzungsumfang-Ermittlungseinrichtung (61) eine Schnittstelle zum Empfangen von Informationen über eine geplante Vermessung von Werkstücken unter Verwendung von zumindest einem Koordinatenmessgerät (10) aufweist, wobei die Nutzungsumfang-Ermittlungseinrichtung (61) ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts (10) zu ermitteln.

14. Anordnung nach einem der Ansprüche 11-13, die eine Anordnung zur Erzeugung einer Messvorschrift ist, wobei die Nutzungsumfang-Ermittlungseinrichtung (61) eine Schnittstelle zum Empfangen von Informationen über eine geplante Vermessung von Werkstücken unter Verwendung von zumindest einem Koordinatenmessgerät (10) aufweist, wobei die Nutzungsumfang-Ermittlungseinrichtung (61) ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts (10) zu ermitteln, und wobei eine Messvorschrift-Erzeugungseinrichtung (80) der Anordnung ausgestaltet ist, aus den Prüfmerkmalen eine Messvorschrift zu erzeugen, die vorgibt, welche Messpunkte eines Werkstücks von einem Koordinatenmessgerät (10) zu vermessen sind.

**Geänderte Patentansprüche gemäss Regel 137(2) EPÜ.**

1. Verfahren zum Prüfen von Werkstücken auf Basis einer Ermittlung von Koordinaten der Werkstücke unter Verwendung von zumindest einem Koordinatenmessgerät (10), wobei

   - Prüfmerkmale (51), die aus den Koordinaten der Werkstücke ermittelbar sind, definiert werden oder Informationen über eine Definition der Prüfmerkmale (51) empfangen werden,
   - anhand der Prüfmerkmale (51) ein Nutzungsumfang (63) einer Nutzung des zumindest einen Koordinatenmessgeräts (10) ermittelt wird,
   - bei der Ermittlung des Nutzungsumfangs (63) ein Wert ermittelt wird, in den eine Anzahl der ermittelten oder zu ermittelnden Prüfmerkmale (51) eingeht,

   und wobei,

   a) Koordinaten der Werkstücke unter Verwendung von zumindest einem Koordinatenmessgerät (10) ermittelt werden und die Prüfmerkmale (51) aus den ermittelten Koordinaten ermittelt werden, wobei bei der Ermittlung von jedem der Prüfmerkmale (51) die für mehrere Messpunkte und/oder zumindest einen Messbereich des Werkstücks ermittelten Koordinaten verwendet werden, und/oder
   b) für zumindest eines der Prüfmerkmale (51) eine Messvorschrift erzeugt wird, die die von einem Koordinatenmessgerät (10) zu vermessenden Messpunkte der Werkstücke vorgibt.

2. Verfahren nach Anspruch 1, wobei verschiedene Arten von Prüfmerkmalen (51) vordefiniert sind, wobei für jede der Arten von Prüfmerkmalen (51) ein individueller Nutzungswert vorgegeben ist oder wird und wobei bei der Ermittlung des Nutzungsumfangs (63) der individuelle Nutzungswert der ermittelten Prüfmerkmale (51) berücksichtigt wird.

3. Verfahren nach Anspruch 1 oder 2, wobei zumindest eines der vordefinierten Prüfmerkmale (51) mit unterschiedlicher Toleranz ermittelbar ist und wobei bei der Ermittlung des Nutzungsumfangs (63) jeweils die Toleranz der ermittelten Prüfmerkmale (51) berücksichtigt wird.

4. Verfahren nach einem der Ansprüche 1-3, wobei zumindest eines der vordefinierten Prüfmerkmale (51) mit unterschiedlicher Geschwindigkeit ermittelbar ist und wobei bei der Ermittlung des Nutzungsumfangs (63) jeweils die Geschwindigkeit der Ermittlung des Prüfmerkmals berücksichtigt wird.

5. Verfahren nach einem der Ansprüche 1-4, wobei eine Speicherung von Daten über die ermittelten Prüfmerkmale (51) in einen Datenspeicher stattfindet und zumindest einmal ein Auslesen oder teilweises Auslesen der Daten aus dem Datenspeicher stattfindet und wobei bei der Ermittlung des Nutzungsumfangs (63) die Speicherung der Daten berücksichtigt wird und jeweils das Auslesen der Daten oder das teilweise Auslesen der Daten berücksichtigt wird.

6. Verfahren nach einem der Ansprüche 1-5, wobei vor der Vermessung der Werkstücke ein Prüfplan erstellt wird, der eine Ermittlung zumindest eines der vordefinierten Prüfmerkmale (51) für jedes zu vermessende Werkstück vorsieht, und wobei anhand des Prüfplans der Nutzungsumfang der Nutzung des zumindest einen Koordinatenmessgeräts (10) ermittelt wird.

7. Verfahren nach Anspruch 6, wobei Prüfplan-Daten erzeugt werden, die alle diejenigen Informationen enthalten, welche aus dem Prüfplan für die Ermittlung des Nutzungsumfangs (63) relevant sind, wobei die Prüfplan-Daten gespeichert werden und wobei bei der Speicherung und/oder zur Speicherung der Prüfplan-Daten ein zusätzlicher Schritt ausgeführt wird, der eine Sicherheit gegen eine Veränderung der Prüfplan-Daten erhöht.

8. Verfahren nach Anspruch 7, wobei die Prüfplan-Daten zu vollständigen Nutzungsumfang-Daten ergänzt werden, die eine Ermittlung des Nutzungsumfangs (63) ermöglichen, und wobei die Nutzungsumfang-Daten gespeichert werden und wobei bei der Speicherung und/oder zur Speicherung der Nutzungsumfang-Daten ein zusätzlicher Schritt ausgeführt wird, der eine Sicherheit gegen eine Veränderung der Nutzungsumfang-Daten erhöht.

9. Verfahren nach einem der Ansprüche 1-8, wobei die Art und oder der Typ des zumindest einen Koordinatenmessgeräts (10) auf Basis von zuvor festgelegten Prüfmerkmalen festgelegt wird, die zu ermitteln sind.

10. Anordnung zum Ermitteln eines Nutzungsumfangs (63) bei der Prüfung von Werkstücken, wobei die Anordnung eine Nutzungsumfang-Ermittlungseinrichtung (61) aufweist, die ausgestaltet ist, insbesondere zur Ausführung des Verfahrens nach einem der Ansprüche 1-9,

- anhand von Prüfmerkmalen der Werkstücke einen Nutzungsumfang (63) einer Nutzung zumindest eines Koordinatenmessgeräts (10) zu ermitteln und
- bei der Ermittlung des Nutzungsumfangs (63) einen Wert zu ermitteln, in den eine Anzahl der ermittelten oder zu ermittelnden Prüfmerkmale (51) eingeht.

11. Anordnung nach Anspruch 10, die eine Anordnung zum Prüfen von Werkstücken ist, wobei die Nutzungsumfang-Ermittlungseinrichtung (61) eine Schnittstelle zum Empfangen von Messergebnissen einer Vermessung von Werkstücken unter Verwendung von zumindest einem Koordinatenmessgerät (10) aufweist, wobei die Messergebnisse ermittelte Koordinaten der Werkstücke aufweisen, und wobei die Nutzungsumfang-Ermittlungseinrichtung (61) ausgestaltet ist, anhand von Prüfmerkmalen der Werkstücke, bei deren Ermittlung jeweils die ermittelten Koordinaten von mehreren Messpunkten und/oder von zumindest einem Messbereich des Werkstücks verwendet werden oder wurden, einen Nutzungsumfang einer Nutzung des zumindest einen Koordinatenmessgeräts (10) zu ermitteln.

12. Anordnung nach Anspruch 10 oder 11, die eine Anordnung zur Simulation der Prüfung von Werkstücken ist, wobei die Nutzungsumfang-Ermittlungseinrichtung (61) eine Schnittstelle zum Empfangen von Informationen über eine geplante Vermessung von Werkstücken unter Verwendung von zumindest einem Koordinatenmessgerät (10) aufweist, wobei die Nutzungsumfang-Ermittlungseinrichtung (61) ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts (10) zu ermitteln.

13. Anordnung nach einem der Ansprüche 10-12, die eine Anordnung zur Erzeugung einer Messvorschrift ist, wobei die Nutzungsumfang-Ermittlungseinrichtung (61) eine Schnittstelle zum Empfangen von Informationen über eine geplante Vermessung von Werkstücken unter Verwendung von zumindest einem Koordinatenmessgerät (10) aufweist, wobei die Nutzungsumfang-Ermittlungseinrichtung (61) ausgestaltet ist, anhand von Prüfmerkmalen der Werkstücke, bei deren Ermittlung gemäß der geplanten Vermessung jeweils Koordinaten von mehreren Messpunkten und/oder von zumindest einem Messbereich des Werkstücks verwendet werden, einen Nutzungsumfang einer Nutzung des zumindest einen Koordinatenmessgeräts (10) zu ermitteln, und wobei eine Messvorschrift-Erzeugungseinrichtung (80) der Anordnung ausgestaltet ist, aus den Prüfmerkmalen eine Messvorschrift zu erzeugen, die vorgibt, welche Messpunkte eines Werkstücks von einem Koordinatenmessgerät (10) zu vermessen sind.

Fig. 1

Fig. 2

Fig. 3

Fig. 4

Fig. 5

Fig. 6

Fig. 7

Fig. 8

Fig. 9

**Europäisches Patentamt**
**European Patent Office**
**Office européen des brevets**

# EUROPÄISCHER RECHERCHENBERICHT

**Nummer der Anmeldung**

EP 21 15 4797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/298958 A1 (YU DAHAI [US] ET AL) 13. Oktober 2016 (2016-10-13) * Absätze [0021] - [0039]; Abbildungen 1-3 * * Absätze [0058] - [0059]; Abbildung 1 * ----- | 1-14 | INV. G01B21/04 G05B19/401 |
| X | WO 2017/121468 A1 (ZEISS CARL INDUSTRIELLE MESSTECHNIK GMBH [DE]) 20. Juli 2017 (2017-07-20) * Seiten 13-16; Abbildungen 1-3 * ----- | 1-14 | |
| X | WO 02/069061 A1 (ZEISS CARL [DE]; ZEISS STIFTUNG [DE]; ROEGELE RUDOLF [DE]) 6. September 2002 (2002-09-06) * Seite 4, Zeile 19 - Seite 8, Zeile 11; Abbildungen 1-2 * ----- | 1-14 | |
| X | DE 10 2014 214771 A1 (ZEISS IND MESSTECHNIK GMBH [DE]) 28. Januar 2016 (2016-01-28) * Absätze [0038] - [0056]; Abbildungen 1-4 * ----- | 1-14 | RECHERCHIERTE SACHGEBIETE (IPC) G01B G05B |

Der vorliegende Recherchenbericht wurde für alle Patentansprüche erstellt

| Recherchenort | Abschlußdatum der Recherche | Prüfer |
|---|---|---|
| München | 17. Juni 2021 | Trique, Michael |

**ANHANG ZUM EUROPÄISCHEN RECHERCHENBERICHT
ÜBER DIE EUROPÄISCHE PATENTANMELDUNG NR.**

EP 21 15 4797

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2021

| Im Recherchenbericht angeführtes Patentdokument | Datum der Veröffentlichung | Mitglied(er) der Patentfamilie | Datum der Veröffentlichung |
|---|---|---|---|
| US 2016298958 A1 | 13-10-2016 | KEINE | |
| WO 2017121468 A1 | 20-07-2017 | EP 3403051 A1<br>WO 2017121468 A1 | 21-11-2018<br>20-07-2017 |
| WO 02069061 A1 | 06-09-2002 | DE 10108688 A1<br>WO 02069061 A1 | 05-09-2002<br>06-09-2002 |
| DE 102014214771 A1 | 28-01-2016 | DE 102014214771 A1<br>US 2017138726 A1<br>US 2021025703 A1<br>WO 2016015928 A1 | 28-01-2016<br>18-05-2017<br>28-01-2021<br>04-02-2016 |

EPO FORM P0461

Für nähere Einzelheiten zu diesem Anhang : siehe Amtsblatt des Europäischen Patentamts, Nr.12/82